(19) **Europäisches Patentamt**
**European Patent Office**
**Office européen des brevets**

(11) **EP 1 708 523 B1**

(12) **EUROPEAN PATENT SPECIFICATION**

(45) Date of publication and mention
of the grant of the patent:
**19.11.2008 Bulletin 2008/47**

(51) Int Cl.:
*H04Q 7/38* (2006.01)     *H04L 12/56* (2006.01)

(21) Application number: **05007165.3**

(22) Date of filing: **01.04.2005**

(54) **Scheduling of mobile terminals in a mobile communication system**

Zeitliche Planung von Endgeräten in einem Funkkommunikationssystem

Ordonnancement de dispositifs mobiles dans un système de communications sans fil

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**04.10.2006 Bulletin 2006/40**

(73) Proprietor: **Panasonic Corporation**
**Kadoma-shi**
**Osaka 571-8501 (JP)**

(72) Inventors:
• **Löhr, Joachim**
**64287 Darmstadt (DE)**
• **Iochi, Hitoshi**
**Yokohama-shi**
**Kanagawa 235-0023 (JP)**
• **Petrovic, Dragan**
**64295 Darmstadt (DE)**

(74) Representative: **Grünecker, Kinkeldey,**
**Stockmair & Schwanhäusser**
**Anwaltssozietät**
**Leopoldstraße 4**
**80802 München (DE)**

(56) References cited:
**US-A- 5 914 950       US-A1- 2004 162 083**

• **"Universal Mobile Telecommunications System (UMTS); Medium Access Control (MAC) protocol specification (3GPP TS 25.321 version 6.4.0 Release 6); ETSI TS 125 321" ETSI STANDARDS, EUROPEAN TELECOMMUNICATIONS STANDARDS INSTITUTE, SOPHIA-ANTIPO, FR, vol. 3-R2, no. V640, March 2005 (2005-03), XP014027656 ISSN: 0000-0001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The invention relates to a method for scheduling mobile terminals within a mobile communication network and to a base station performing this method. Further, the invention relates to a method for acting upon the reception of scheduling grants in a mobile communication system and to a mobile terminal performing this method.

**TECHNICAL BACKGROUND**

W-CDMA (Wideband Code Division Multiple Access) is a radio interface for IMT-2000 (International Mobile Communication), which was standardized for use as the 3rd generation wireless mobile telecommunication system. It provides a variety of services such as voice services and multimedia mobile communication services in a flexible and efficient way. The standardization bodies in Japan, Europe, USA, and other countries have jointly organized a project called the 3rd Generation Partnership Project (3GPP) to produce common radio interface specifications for W-CDMA.
The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.
The dedicated channel (DCH) for downlink and uplink and the downlink shared channel (DSCH) have been defined in Release 99 and Release 4. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

**HYBRID ARQ SCHEMES**

A common technique for error detection and correction in packet transmission systems over unreliable channels is called hybrid Automatic Repeat request (HARQ). Hybrid ARQ is a combination of Forward Error Correction (FEC) and ARQ.
If a FEC encoded packet is transmitted and the receiver fails to decode the packet correctly (errors are commonly detected based on a CRC (Cyclic Redundancy Check)), the receiver requests a retransmission of the packet. Commonly the transmission of additional information is called "retransmission (of a packet)", although this retransmission does not necessarily mean a transmission of the same encoded information, but could also mean the transmission of any information belonging to the packet (e.g. additional redundancy information).
Depending on the information (generally code-bits/symbols), of which the transmission is composed of, and depending on how the receiver processes the information, the following hybrid ARQ schemes are defined:

*HARQ Type I*

If the receiver fails to decode a packet correctly, the information of the encoded packet is discarded and a retransmission is requested. This implies that all transmissions are decoded separately. Generally, retransmissions contain identical information (code-bits/symbols) to the initial transmission.

*HARQ Type II*

If the receiver fails to decode a packet correctly, a retransmission is requested, where the receiver stores the information of the (erroneous received) encoded packet as soft information (soft-bits/symbols). This implies that a soft-buffer is required at the receiver. Retransmissions can be composed out of identical, partly identical or non-identical information (code-bits/symbols) according to the same packet as earlier transmissions.
When receiving a retransmission the receiver combines the stored information from the soft-buffer and the currently received information and tries to decode the packet based on the combined information. The receiver may also try to decode the transmission individually, however generally performance increases when combining transmissions.
The combining of transmissions refers to so-called soft-combining, where multiple received code-bits/symbols are likelihood combined and solely received code-bits/symbols are code combined. Common methods for soft-combining are Maximum Ratio Combining (MRC) of received modulation symbols and log-likelihood-ratio (LLR) combining (LLR combing only works for code-bits).

Type II schemes are more sophisticated than Type I schemes, since the probability for correct reception of a packet increases with receive retransmissions. This increase comes at the cost of a required hybrid ARQ soft-buffer at the receiver. This scheme can be used to perform dynamic link adaptation by controlling the amount of information to be retransmitted.

E.g. if the receiver detects that decoding has been "almost" successful, it can request only a small piece of information for the next retransmission (smaller number of code-bits/symbols than in previous transmission) to be transmitted. In this case it might happen that it is even theoretically not possible to decode the packet correctly by only considering this retransmission by itself (non-self-decodable retransmissions).

*HARQ Type III*

This is a subset of Type II with the restriction that each transmission must be self-decodable.

**Packet Scheduling**

Packet scheduling may be a radio resource management algorithm used for allocating transmission opportunities and transmission formats to the users admitted to a shared medium. Scheduling may be used in packet based mobile radio networks in combination with adaptive modulation and coding to maximize throughput/capacity by e.g. allocating transmission opportunities to the users in favorable channel conditions. The packet data service in UMTS may be applicable for the interactive and background traffic classes, though it may also be used for streaming services. Traffic belonging to the interactive and background classes is treated as non real time (NRT) traffic and is controlled by the packet scheduler. The packet scheduling methodologies can be characterized by:

- **Scheduling period/frequency:** The period over which users are scheduled ahead in time.

- **Serve order:** The order in which users are served, e.g. random order (round robin) or according to channel quality (C/I or throughput based).

- **Allocation method:** The criterion for allocating resources, e.g. same data amount or same power/code/time resources for all queued users per allocation interval.

The packet scheduler for uplink is distributed between Radio Network Controller (RNC) and user equipment in 3GPP UMTS R99/R4/R5. On the uplink, the air interface resource to be shared by different users is the total received power at a Node B, and consequently the task of the scheduler is to allocate the power among the user equipment(s). In current UMTS R99/R4/R5 specifications the RNC controls the maximum rate/power a user equipment is allowed to transmit during uplink transmission by allocating a set of different transport formats (modulation scheme, code rate, etc.) to each user equipment.

The establishment and reconfiguration of such a TFCS (transport format combination set) may be accomplished using Radio Resource Control (RRC) messaging between RNC and user equipment. The user equipment is allowed to autonomously choose among the allocated transport format combinations based on its own status e.g. available power and buffer status. In current UMTS R99/R4/R5 specifications there is no control on time imposed on the uplink user equipment transmissions. The scheduler may e.g. operate on transmission time interval basis.

**UMTS Architecture**

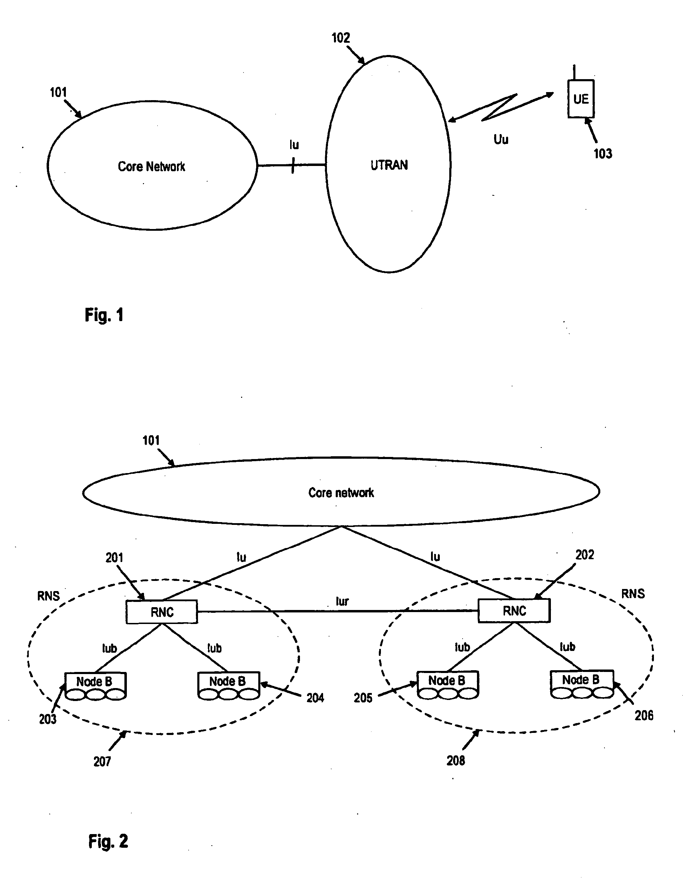

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (Iu, Uu). It should be noted that UMTS system is modular and it is therefore possible to have several network elements of the same type.

In the sequel two different architectures will be discussed. They are defined with respect to logical distribution of functions across network elements. In actual network deployment, each architecture may have different physical realizations meaning that two or more network elements may be combined into a single physical node.

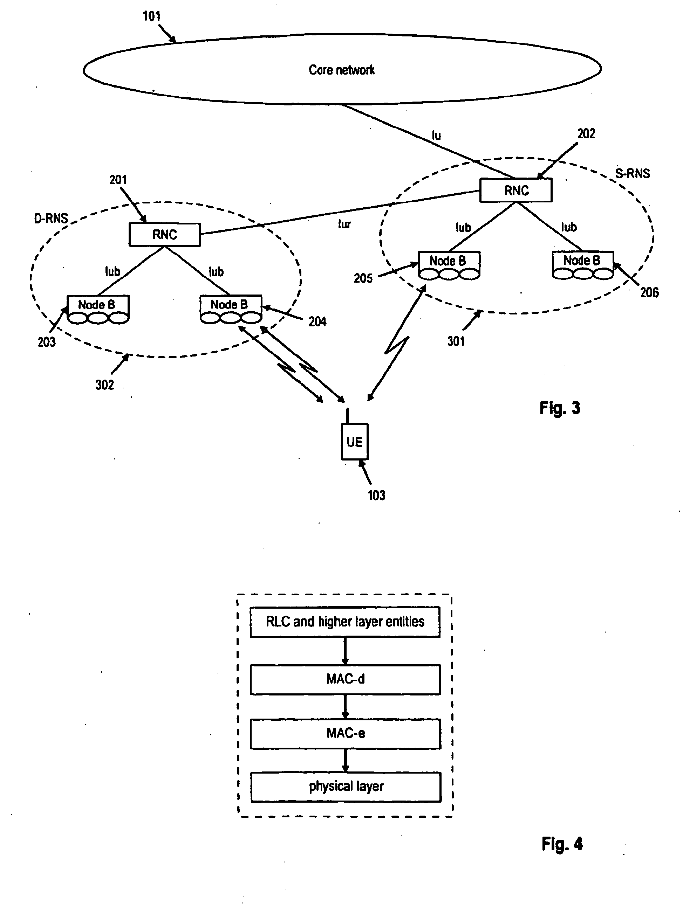

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

## Mobility Management within Rel99/4/5 UTRAN

Before explaining some procedures connected to mobility management, some terms frequently used in the following are defined first.

A radio link may be defined as a logical association between single UE and a single UTRAN access point. Its physical realization comprises radio bearer transmissions.

A handover may be understood as a transfer of a UE connection from one radio bearer to another (hard handover) with a temporary break in connection or inclusion / exclusion of a radio bearer to / from UE connection so that UE is constantly connected UTRAN (soft handover). Soft handover is specific for networks employing Code Division Multiple Access (CDMA) technology. Handover execution may controlled by S-RNC in the mobile radio network when taking the present UTRAN architecture as an example.

The active set associated to a UE comprises a set of radio links simultaneously involved in a specific communication service between UE and radio network. An active set update procedure may be employed to modify the active set of the communication between UE and UTRAN, for example during soft-handover. The procedure may comprise three functions: radio link addition, radio link removal and combined radio link addition and removal. The maximum number of simultaneous radio links is set to eight. New radio links are added to the active set once the pilot signal strengths of respective base stations exceed certain threshold relative to the pilot signal of the strongest member within active set.

A radio link is removed from the active set once the pilot signal strength of the respective base station exceeds certain threshold relative to the strongest member of the active set. Threshold for radio link addition is typically chosen to be higher than that for the radio link deletion. Hence, addition and removal events form a hysteresis with respect to pilot signal strengths.

Pilot signal measurements may be reported to the network (e.g. to S-RNC) from UE by means of RRC signaling. Before sending measurement results, some filtering is usually performed to average out the fast fading. Typical filtering duration may be about 200 ms contributing to handover delay. Based on measurement results, the network (e.g. S-RNC) may decide to trigger the execution of one of the functions of active set update procedure (addition / removal of a Node B to / from current Active Set).

## Enhanced Uplink Dedicated Channel (E-DCH)

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org). Since the use of IP-based services become more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B may be reduced and thus the scheduler may be able to respond faster to temporal changes in the uplink load. This may reduce the overall latency in communications of the user equipment with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A transmission time interval length of 2ms is currently investigated for use on the E-DCH, while a transmission time interval of 10ms is commonly used on the other channels. Hybrid ARQ, which was one of the key technologies in HSDPA, is also considered for the enhanced uplink dedicated channel. The Hybrid ARQ protocol between a Node B and a user equipment allows for rapid retransmissions of erroneously received data units, and may thus reduce the number of RLC (Radio Link Control) retransmissions and the associated delays. This may improve the quality of service experienced by the end user.

To support enhancements described above, a new MAC sub-layer is introduced which will be called MAC-e in the following (see 3GPP TSG RAN WG1, meeting #31, Tdoc R01-030284, "Scheduled and Autonomous Mode Operation for the Enhanced Uplink"). The entities of this new sub-layer, which will be described in more detail in the following sections, may be located in user equipment and Node B. On user equipment side, the MAC-e performs the new task of multiplexing upper layer data (e.g. MAC-d) data into the new enhanced transport channels and operating HARQ protocol transmitting entities.

Further, the MAC-e sub-layer may be terminated in the S-RNC during handover at the UTRAN side. Thus, the reordering buffer for the reordering functionality provided may also reside in the S-RNC.

*E-DCH MAC Architecture - UE side*

Fig. 4 shows the exemplary overall E-DCH MAC architecture on UE side. A new MAC functional entity, the MAC-e/es, is added to the MAC architecture of Release '99.

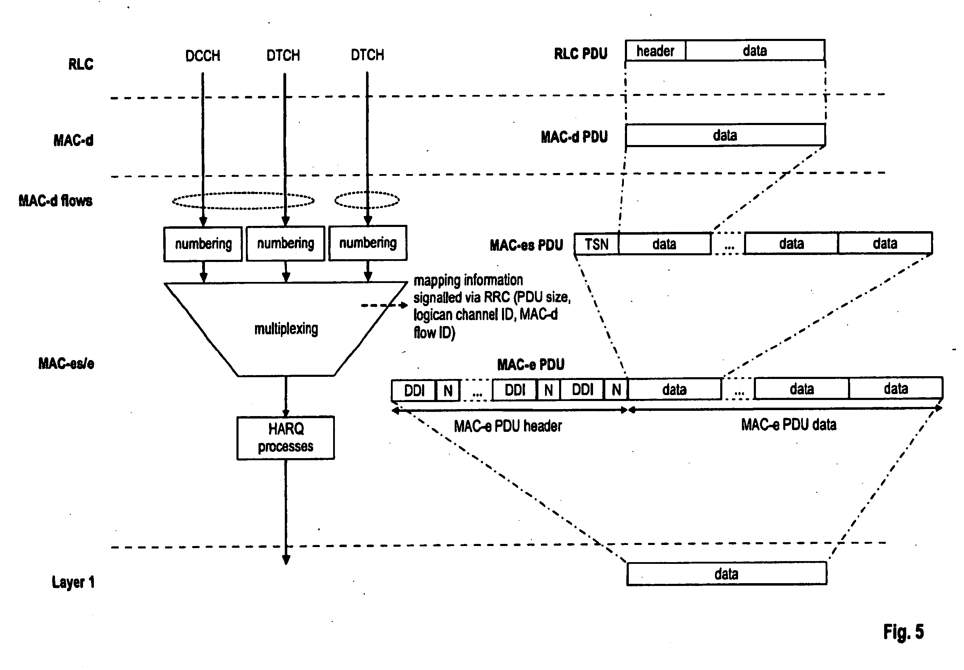

The MAC interworking on the UE side is illustrated in Figure 5. There are M different data flows (MAC-d) carrying data packets from different applications to be transmitted from UE to Node B. These data flows can have different QoS requirements (e.g. delay and error requirements) and may require different configuration of HARQ instances. Each MAC-d flow represents a logical unit to which specific physical channel (e.g. gain factor) and HARQ (e.g. maximum number of retransmissions) attributes can be assigned.

Further, MAC-d multiplexing is supported for an E-DCH, i.e. several logical channels with different priorities may be multiplexed onto the same MAC-d flow. Data of multiple MAC-d flows can be multiplexed in one MAC-e PDU. In the MAC-e header, the DDI (Data Description Indicator) field identifies logical channel, MAC-d flow and MAC-d PDU size. A mapping table is signalled over RRC, to allow the UE to set DDI values. The N field indicates the number of consecutive MAC-d PDUs corresponding to the same DDI value.

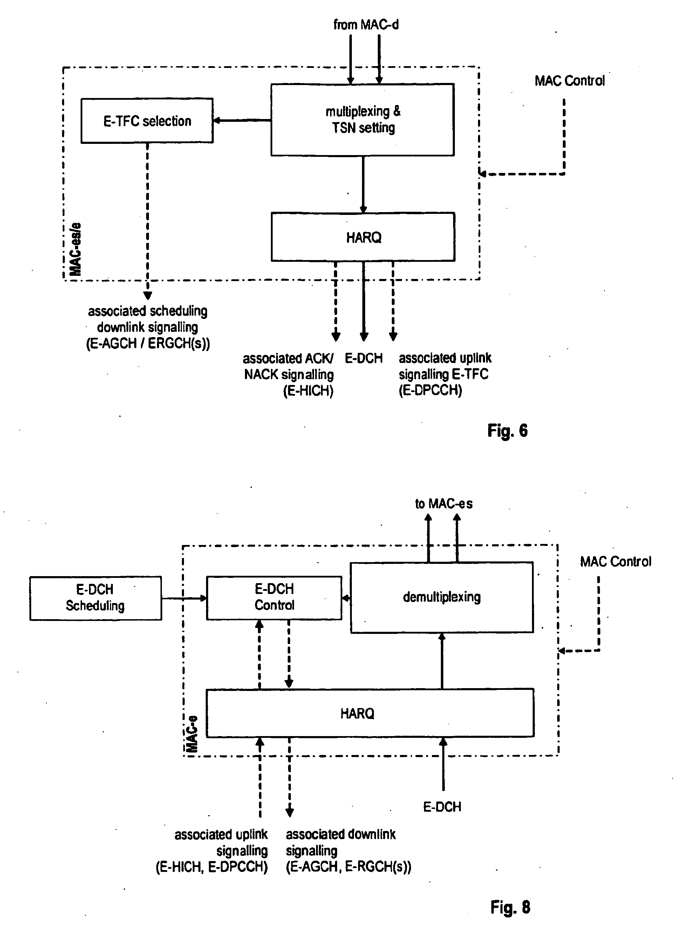

The MAC-e/es entity is depicted in more detail in Figure 6. The MAC-es/e handles the E-DCH specific functions. The selection of an appropriate transport format for the transmission of data on E-DCH is done in the E-TFC Selection entity, which represents a function entity. The transport format selection is done according to the scheduling information (Relative Grants and Absolute Grants) received from UTRAN via L1, the available transmit power, priorities, e.g. logical channel priorities. The HARQ entity handles the retransmission functionality for the user. One HARQ entity supports multiple HARQ processes. The HARQ entity handles all HARQ related functionalities required. The multiplexing entity is responsible for concatenating multiple MAC-d PDUs into MAC-es PDUs, and to multiplex one or multiple MAC-es PDUs into a single MAC-e PDU, to be transmitted at the next TTI, and as instructed by the E-TFC selection function. It is also responsible for managing and setting the TSN per logical channel for each MAC-es PDU. The MAC-e/es entity receives scheduling information from Node B (network side) via Layer 1 signaling as shown in Fig. 6. Absolute grants are received on E-AGCH (Enhanced Absolute Grant Channel), relative grants are received on the E-RGCH (Enhanced Relative Grant Channel).

*E-DCH MAC Architecture - UTRAN side*

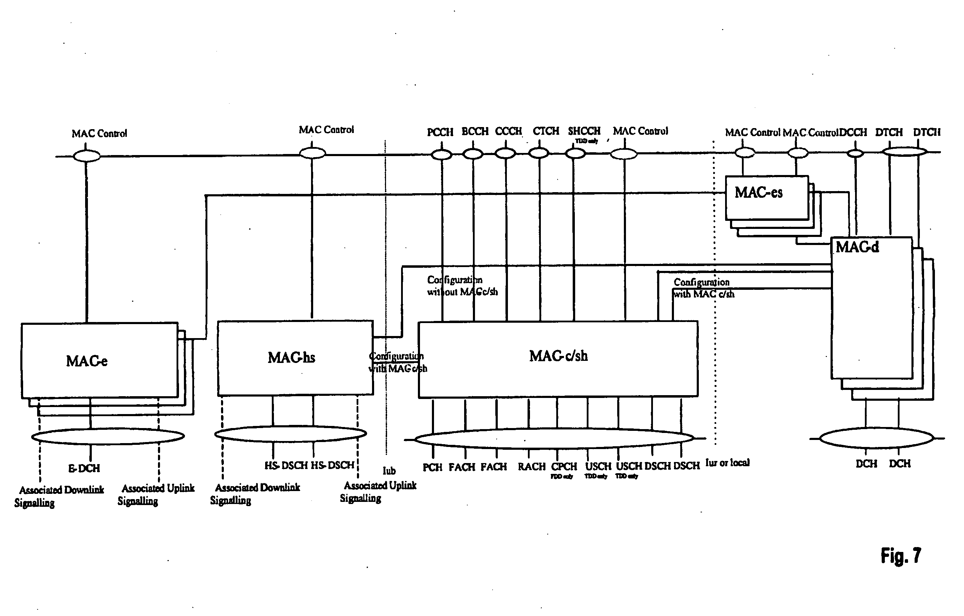

An exemplary overall UTRAN MAC architecture is shown in Fig. 7. The UTRAN MAC architecture includes a MAC-e entity and a MAC-es entity. For each UE that uses an E-DCH, one MAC-e entity per Node-B and one MAC-es entity in the S-RNC are configured.

The MAC-e entity is located in the Node B and controls access to the E-DCH. Further, the MAC-e entity is connected to MAC-es located in the S-RNC.

In Fig. 8 the MAC-e entity in Node B is depicted in more detail. There is one MAC-e entity in Node B for each UE and one E-DCH scheduler function in the Node-B for all UEs. The MAC-e entity and E-DCH scheduler handle HSUPA (High-Speed Uplink Packet Access) specific functions in Node B. The E-DCH scheduling entity manages E-DCH cell resources between UEs. Commonly, scheduling assignments are determined and transmitted based on scheduling requests from the UEs. The De-multiplexing entity in the MAC-e entity provides de-multiplexing of MAC-e PDUs. MAC-es PDUs are then forwarded to the MAC-es entity in the S-RNC.

One HARQ entity is capable of supporting multiple instances (HARQ processes), e.g. employing a stop and wait HARQ protocols. Each HARQ process is assigned a certain amount of the soft buffer memory for combining the bits of the packets from outstanding retransmissions. Furthermore each process is responsible for generating ACKs or NACKS indicating delivery status of E-DCH transmissions. The HARQ entity handles all tasks that are required for the HARQ protocol.

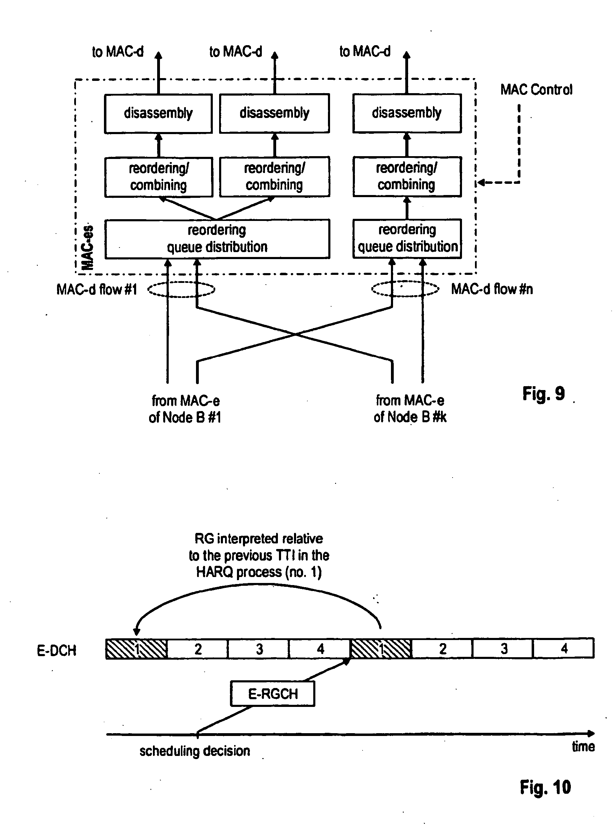

In Fig. 9 the MAC-es entity in the S-RNC is shown. It comprises the reordering buffer which provides in-sequence delivery to RLC and handles the combining of data from different Node Bs in case of soft handover. The combining is referred to as Macro diversity selection combining.

It should be noted that the required soft buffer size depends on the used HARQ scheme, e.g. an HARQ scheme using incremental redundancy (IR) requires more soft buffer than one with chase combining (CC).

**E-DCH - Node B controlled scheduling**

Node B controlled scheduling is one of the technical features for E-DCH which may enable more efficient use of the uplink resources in order to provide a higher cell throughput in the uplink and may increase the coverage. The term "Node B controlled scheduling" denotes the possibility for a Node B to control uplink resources, e.g. the E-DPDCH/DPCCH power ratio, which the UE may use for uplink transmissions on the E-DCH within limits set by the S-RNC. Node B controlled scheduling is based on uplink and downlink control signaling together with a set of rules on how the UE should behave with respect to this signaling.

In the downlink, a resource indication (scheduling grant) is required to indicate to the UE the (maximum) amount of uplink resources it may use. When issuing scheduling grants, the Node B may use QoS-related information provided by the S-RNC and from the UE in the scheduling requests to determine the appropriate allocation of resources for servicing the UE at the requested QoS parameters.

For the UMTS E-DCH, there are commonly two different UE scheduling modes defined depending on the type of scheduling grants used. In the following the characteristics of the scheduling grants are described.

*Scheduling Grants*

Scheduling grants are signaled in the downlink in order to indicate the (maximum) resource the UE may use for uplink transmissions. The grants affect the selection of a suitable transport format (TF) for the transmission on the E-DCH (E-TFC selection). However, they usually do not influence the TFC selection (Transport Format Combination) for legacy dedicated channels.

There are commonly two types of scheduling grants which are used for the Node B controlled scheduling:

   • absolute grants (AGs), and

   • relative grants (RGs)

The absolute grants provide an absolute limitation of the maximum amount of uplink resources the UE is allowed to use for uplink transmissions. Absolute grants are especially suitable to rapidly change the allocated UL resources.

Relative grants are transmitted every TTI (Transmission Time Interval). They may be used to adapt the allocated uplink resources indicated by absolute grants by granular adjustments: A relative grant indicates the UE to increase or decrease the previously allowed maximum uplink resources by a certain offset (step).

Absolute grants are only signaled from the E-DCH serving cell. Relative grants can be signaled from the serving cell as well as from a non-serving cell. The E-DCH serving cell denotes the entity (e.g. Node B) actively allocating uplink resources to UEs controlled by this serving cell, whereas a non-serving cell can only limit the allocated uplink resources, set by the serving cell. Each UE has only one serving cell.

Absolute grants may be valid for a single UE. An absolute grant valid for a single UE is referred to in the following as a "dedicated grant. Alternatively, an absolute grant may also be valid for a group of or all UEs within a cell. An absolute grant valid for a group of or all UEs will be referred to as a "common grant" in the following. The UE does not distinguish between common and dedicated grants.

Relative grants can be sent from serving cell as well as from a non-serving cell as already mentioned before. A relative grant signaled from the serving cell may indicate one of the three values, "UP", "HOLD" and "DOWN". "UP" respectively "DOWN" indicates the increase/decrease of the previously maximum used uplink resources (maximum power ratio) by one step. Relative grants from a non-serving cell can either signal a "HOLD" or "DOWN" command to the UE. As mentioned before relative grants from non-serving cells can only limit the uplink resources set by the serving cell (overload indicator) but can not increase the resources that can be used by a UE.

*UE scheduling operation*

Two different UE scheduling mode operations are defined for E-DCH, "RG" based and "non-RG" based mode of operation.

In the RG based mode, the UE obeys relative grants from the E-DCH serving cell. The RG based scheduling mode is also often referred to as the dedicated rate control mode, because the scheduling grants usually address a single UE in the most cases.

In the following the UE behavior in this RG based scheduling mode is described. The UE maintains a serving grant (SG) for each HARQ process. The serving grant indicates the maximum power ratio (E-DPDCH/DPCCH) the UE is allowed to use for transmissions on the E-DCH and is for the selection of an appropriate TFC during E-TFC selection. The serving grant is updated by the scheduling grants signaled from serving/non-serving cells. When the UE receives an absolute grant from the serving cell the serving grant is set to the power ratio signaled in the absolute grant. The absolute grant can be valid for each HARQ process or only for one HARQ process.

When no absolute grant is received from the serving cell the UE should follow the relative grants from the serving cell, which are signaled every TTI. A serving relative grant is interpreted relative to the UE power ratio in the previous TTI for the same hybrid ARQ process as the transmission, which the relative grant will affect. Fig. 10 illustrates the timing relation for relative grants. In Fig. 10 it is assumed for exemplary purposes that there are four HARQ processes. The relative grant received by the UE, which affects the serving grant of the first HARQ process, is relative to the first HARQ process of the previous TTI (reference process).

The UE behavior in accordance to serving E-DCH relative grants is shown in the following:

• When the UE receives an "UP" command from Serving E-DCH Radio Link Set (RLS):

$$\text{New } SG_i = \text{Last used power ratio (i)} + \text{Delta;}$$

• When the UE receives a "DOWN" command from Serving E-DCH RLS:

$$\text{New } SG_i = \text{Last used power ratio (i)} - \text{Delta;}$$

The "UP" and "DOWN" command is relative to the power ratio used for E-DCH transmission in the reference HARQ process. The new serving grant of the HARQ process j, affected by the relative grant, is an increase respectively decrease of the last used power ratio in the reference HARQ process.

The "HOLD" command indicates either that the SG of HARQ process j remains unchanged or that the SG of the reference HARQ process in the immediate preceding TTI is reused for the current TTI for all HARQ processes.

As already mentioned before a Node B from a non-serving RLS is only allowed to send relative grants, which can either indicate a "HOLD" or "DOWN". The "DOWN" command enables non-serving cells to limit the intercell-interference caused by UEs which are in SHO with these non-serving cells. The UE behavior upon reception of non-serving relative grants is as follows:

• When the UE receives a "DOWN" from at least one Non-serving E-DCH RLS: For all HARQ processes (for all i): new $SG_i$ = Last used power ratio (i) - Delta Relative grants from a non-serving RLS affect all HARQ processes in the UE. The amount of the reduction of the used power ratio might be static or depending on the bit rate, for higher bit rates there might be a larger step size (Delta).

Next, the non-RG based scheduling mode will be outlined in further detail. In case that there are relative grant channels (E-RGCH) established from the serving E-DCH RLS, the UE follows the non-RG based mode of operation. The non-RG based scheduling mode is also referred to as common rate control mode.

The idea is to serve a group of or all UEs in the cell by common absolute grants. The common rate control has the advantage over dedicated rate control scheduling that less downlink signaling from serving RLS perspective is needed, only common absolute grants and also no relative grants.

However the use of common absolute grants to schedule an entire cell inevitably leads to a need for caution when new UEs start to transmit. If an absolute grant is issued with e.g. 64 kbps, hardware and RoT (Rise over Thermal) resources cannot be reserved for all UEs connected in the cell. Therefore when a new UE becomes active, it needs to start transmissions at a low power ratio (i.e. using a low amount of uplink resources) to enable dynamic allocation of hardware and RoT resources by the Node B. This process is called UE ramping in the following: the UE autonomously ramps up its resource usage towards the maximum resources indicated by the latest absolute grant. The step sizes of the UE ramping are for example configured by RRC (Radio Resource Control).

The UE acts upon the absolute grant from serving RLS as follows:

• The UE maintains a "serving grant" (SG), which is used in the E-TFC selection algorithm as the maximum allowed E-DPDCH/DPCCH power ratio for the uplink transmissions on the HARQ process it refers to

- The UE furthermore maintains a "maximum serving grant" (MAX SG) which is set to the last received absolute grant for all HARQ processes

- If the UE has data to transmit and the SG is below the MAX SG, the SG is increased over time by configurable steps (autonomous ramp-up) until SG is equal to MAX SG

- If the SG is above the MAX SG (due to reception of a new absolute grant lowering the MAX SG), then the SG is immediately set equal to MAX SG

- If the UE transmitted at a given power ratio below the current SG for more than n TTIs (where n is a configurable parameter that can be set to an infinite value), then the SG is set equal to this given power ratio. This in effect forces the UE to use autonomous ramp-up after some continuous activity below SG.

The UE ramps up towards the last received absolute grant for example at the beginning of a connection and after some certain period of time ($\Delta t$), during which the UE is transmitting with a lower power ratio than allocated by serving cell.

The relative grants from non-serving RLS affect the MAX SG of a UE.

- When the UE receives a "DOWN" from at least one Non-serving E-DCH RLS

$$\text{new MAX SG} = \text{MAX SG} - \text{Delta}$$

The difference of the UE behavior for the non-RG based scheduling mode compared to the RG based scheduling mode with respect to relative grants from a non-serving RLS is that the relative grants affect the MAX SG instead of the last used power ratio. Therefore the UE is still allowed to ramp-up to the reduced MAX SG. When no more "DOWN" commands from a non-serving RLS is received the UE sets the MAX SG to the last received absolute grant and ramps towards this MAX SG.

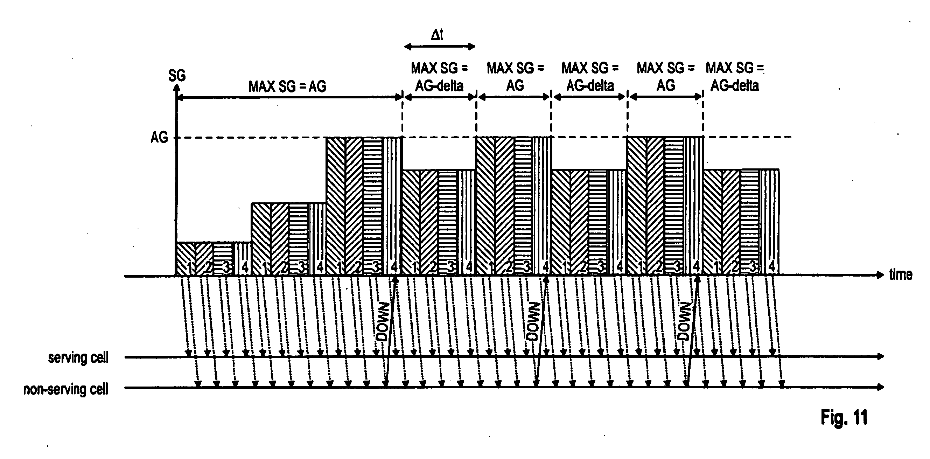

An exemplary scenario for the non-RG based mode is shown in Fig. 11. The UE is in soft handover and transmits the uplink data in four HARQ processes, numbered 1, 2, 3 and 4 to a serving cell and a non-serving cell. Upon starting communication, MAX SG is equal to AG, and SG is increased step-wise until reaching MAX SG.

Upon reaching MAX SG, the non-serving cell sends a "DOWN" command to the UE in order to request same to reduce the uplink resources utilized. The UE sets the new MAX SG equal to AG minus a configurable delta, and transmits the next uplink data for processes 1 to 4 with this reduced MAX SG value (i.e. MAX SG = SG). Upon expiry of a predetermined time period ($\Delta t$) the MAX SG is reset to AG. Again, the non-serving cell requests a reduction of the utilized uplink resources and the UE reacts upon the further "DOWN" commands from the non-serving cell as explained above.

**Rate Request signaling**

In order to enable Node B to schedule efficiently while considering also the QoS requirements of a service mapped on the E-DCH, an UE provides the Node B information on its QoS requirements by means of rate request signaling.

There are two kinds of rate request signaling information on the uplink: the so called "happy bit", which is a flag related to a rate request on the E-DPCCH and the scheduling information (SI), which is commonly sent in-band on the E-DCH.

From a system point of view, the one-bit rate request may be advantageously used by the serving cell to effect small adjustments in the resource allocation for example by means of relative grants. On the contrary, scheduling information may advantageously be employed for making longer term scheduling decisions, which would be reflected in the transmission of an absolute grant. Details on the two rate request signaling methods are provided in the following.

*Scheduling Information sent on E-DCH*

As mentioned before the scheduling information should provide Node B information on the UE status in order to allow for an efficient scheduling. Scheduling information may be included in the header of a MAC-e PDU. The information is commonly sent periodically to Node B in order to allow the Node B to keep track of the UE status. E.g. the scheduling information comprises following information fields:

• Logical channel ID of the highest priority data in the scheduling information

• UE buffer occupancy (in Bytes)

○ Buffer status for the highest priority logical channel with data in buffer
○ Total buffer status

• Power status information

○ Estimation of the available power ratio versus DPCCH (taking into account HS-DPCCH). UE should not take power of DCHs into account when performing the estimation

Identifying the logical channel by the logical channel ID from which the highest priority data originates may enable the Node B to determine the QoS requirements, e.g. the corresponding MAC-d flow power offset, logical channel priority or GBR (Guaranteed Bit Rate) attribute, of this particular logical channel. This in turn enables the Node B to determine the next scheduling grant message required to transmit the data in the UE buffer, which allows for a more precise grant allocation. In addition to the highest priority data buffer status, it may be beneficial for the Node B to have some information on the total buffer status. This information may help in making decisions on the "long-term" resource allocation.

In order for the serving Node B to be able to allocate uplink resources effectively, it needs to know up to what power each UE is able to transmit. This information could be conveyed in the form of a "power headroom" measurement, indicating how much power the UE has left over on top of that what is used for DPCCH transmissions (power status). The power status report could also be used for the triggering of a TTI reconfiguration, e.g. switching between 2ms and 10ms TTI and vice versa.

*Happy Bit*

As already explained above the happy bit denotes a one-bit rate request related flag, which is sent on the E-DPCCH. The "happy bit" indicates whether the respective UE is "happy" or "unhappy" with the current serving grant (SG).
The UE indicates that it is "unhappy", if both of the following criteria are met:

• Power status criterion: UE has power available to send at higher data rates (E-TFCs) and

• Buffer occupancy criterion: Total buffer status would require more than n TTIs with the current Grants (where n is configurable).

Otherwise, the UE indicates that it is "happy" with the current serving grant.

**Soft-Handover support for E-DCH and Scheduling**

One problem of the soft-handover support for E-DCH is the contribution of UEs in soft - handover to the inter-cell interference in non-serving cells. Due to that fact that the E-DCH scheduler in the serving cell is not aware of the load situation in adjacent cells of different Node Bs, UEs controlled by the serving cell could potentially cause an overload situation in those adjacent cells. A non-serving RLS can limit the inter-cell interference caused by SHO UEs by means of relative grants, also referred to as overload indicator. However a non-serving RLS can only react when an overload situation has already occurred.
An overload indicator, "DOWN" command, signaled from a non-serving RLS, affects either the used bit rate of an UE (RG based scheduling mode) or the MAX SG (non-RG based scheduling mode). However in the non-RG based scheduling mode outlined above the UE ramps up its resource utilization again towards the last received absolute grant after no further "DOWN" command is received from a non-serving RLS within a predetermined time span. Therefore additional complexity is necessary, e.g. by means of multiple timers, to ensure that UEs in soft.-handover reduce their resource utilization for uplink transmissions for a longer time period after an overload situation occurred in a non-serving cell to which they are handed over. As discussed in the copending European application "'Happy Bit' setting in a Mobile Communication System' filed on the same date as this application EP17085 a serving cell may be aware of "DOWN" commands from a non-serving RLS by considering the unhappy/happy status of the UE and the received E-TFC on the E-DPDCH.
A scheduling method and system that considers all cells involved in hand-off is known from US5914950.
Upon having recognized an overload situation in a neighboring cell the Node B scheduler could lower the power ratio by issuing a lower absolute grant. However, since the entire cell is scheduled by a common absolute grant in the non-RG based scheduling mode, also the UEs, which are not in soft-handover would be forced to lower their resource utilization. Hence the system throughput would be decreased in that case.

**SUMMARY OF THE INVENTION**

The object of the invention is to allow the serving cell to control resource utilization for uplink transmissions of UEs in soft-handover, without thereby decreasing the system throughput of UEs in the serving cell which are not in soft-handover.

The object is solved by the subject matter of the independent claims. Advantageous embodiments of the invention are subject matters to the dependent claims.

As indicated above, the main problem with the non-RG based scheduling mode is that the entire cell is scheduled by absolute grants, which in turn also limits the throughput of UEs not in soft-handover. Therefore it would be in general more efficient to limit only the resource utilization of mobile terminal which are in soft-handover. In the RG based scheduling mode this can be basically done by means of dedicated relative or even dedicated absolute grants, which on the downside requires more downlink signaling. In the non-RG based scheduling mode, however, there is no relative grant channel from the serving cell, which can be used for the restriction of the resource utilization of mobile terminals in soft handover.

One of the main aspects of the invention is the introduction of some further control information for transmission via the shared absolute grant channel, e.g. within absolute grants transmitted by a base station controlling a serving cell via the shared absolute grant channel to mobile terminals. The control information, which may be communicated in form of a flag, enables the base station to indicate to the mobile terminals, whether the absolute grant is valid for mobile terminals in soft handover. Thereby, it is for example possible that the base station defines different maximum amounts of resources that may be utilized at maximum by the mobile terminals for uplink transmissions for a soft-handover case and a non-soft-handover case. In an exemplary embodiment of the invention the problems are mitigated by the introduction of a one-bit flag on the absolute grant channel (E-AGCH), which indicates whether the grant is valid for mobile terminals in soft-handover only.

One embodiment of the invention relates to a method for scheduling mobile terminals within a mobile communication network, wherein a plurality of mobile terminals is scheduled by a base station controlling the serving cell of the mobile terminals. A part of the plurality of mobile terminals is in soft-handover to a non-serving cell respectively. According to this embodiment the base station of the serving cell transmits via a shared absolute grant channel an absolute grant to the mobile terminals. The absolute grant indicates the maximum amount of uplink resources a mobile terminal is allowed to utilize for uplink data transmissions to the base station controlling serving cell and a base station controlling a non-serving cell of the mobile terminal via dedicated uplink channels. Further, the absolute grant comprises information indicating that the absolute grant is valid for a mobile terminal in soft-handover only. Further the base station controlling the serving cell receives uplink data from the mobile terminals in soft-handover via dedicated uplink channels. The amount of resources utilized for uplink transmissions on the dedicated uplink channel has been set based on the maximum amount of resources indicated in the absolute grant.

In another embodiment of the invention the base station schedules the mobile terminals in a common rate control mode. In the common rate control mode all mobile terminals receive and evaluate absolute grants received via the shared absolute grant channel.

In a variation of this embodiment, the absolute grant consists of a power ratio indicating the maximum amount of uplink resources each of the mobile terminals is allowed to utilize and the flag indicating whether the absolute grant is valid for a mobile terminal in soft-handover only.

In an alternative variation of the embodiment, the mobile terminals in soft-handover are scheduled with another transmission time interval than mobile terminals not in soft-handover, and the absolute grant consists of a power ratio indicating the maximum amount of uplink resources each of the mobile terminals is allowed to utilize and a flag indicating the transmission time interval of uplink data transmissions for which the absolute grant is valid.

According to another embodiment of the invention, the base station schedules the mobile terminals in a dedicated rate control mode. In this scheduling mode, the base station transmits absolute grants addressing either one mobile terminal of the plurality of mobile terminals, a group of said plurality of mobile terminals or all of the plurality of mobile terminals.

According to a further embodiment of the invention, the absolute grant may consist of a power ratio indicating the maximum amount of uplink resources the addressed mobile terminal is or the addressed mobile terminals are allowed to utilize, a single process flag indicating whether the absolute grant is valid for one of a plurality of HARQ processes only and the flag indicating whether the absolute grant is valid for a mobile terminal in soft-handover only.

In another embodiment of the invention, the maximum amount of resources the mobile terminals are to be allowed to utilize during soft-handover is indicated by the absolute grant in form of a percentage defining how many percent of the maximum uplink resources a mobile terminal utilizes when not in handover is to be utilized at maximum by a mobile terminal in soft-handover.

According to another embodiment, the base station controlling the serving cell may receive from the radio network controller information indicating the maximum amount of resources the mobile terminals are to be allowed to utilize during handover. In a variation of this embodiment, the maximum amount of resources the mobile terminals are to be allowed to utilize during handover is indicated in form of a percentage defining how many percent of the maximum uplink resources a mobile terminal utilizes when not in handover is to be utilized at maximum by a mobile terminal in soft-handover

In another embodiment of the invention the base station controlling the serving cell receives uplink data via a dedicated uplink channel from a mobile terminal in soft-handover and associated control information via dedicated uplink control channel. The control information comprises a resource request flag that, when set by the mobile terminal, requests the base station controlling the serving cell to increase the uplink resources for uplink data transmissions and a transport format indicator indicating the transport format combination used for transmitting uplink data to the base station controlling the serving cell within a transmission time interval.

The base station may further detect whether the resource request flag is set and whether the transport format indicator indicates a transport format combination utilizing a lower amount of uplink resources than allowed by the base station of the serving cell in the absolute grant valid for a mobile terminal in soft-handover only. If this is the case the base station may transmit another absolute grant to the mobile terminal, wherein the absolute grant indicates the maximum amount of uplink resources a mobile terminal is allowed to utilize for uplink data transmissions to the base station controlling serving cell and a base station controlling a non-serving cell of the mobile terminal via dedicated uplink channels. The maximum amount of resources indicated in the new absolute grant is lower than the maximum amount of uplink resources the mobile terminals in soft-handover are currently allowed to use, and comprises information indicating that the absolute grant is valid for a mobile terminal in soft-handover only.

Further, another embodiment of the invention relates to a method for acting upon the reception of absolute grants received by a mobile terminal within a mobile communication network in which a plurality of mobile terminals comprising the terminals is scheduled by a base station controlling the serving cell of the mobile terminals. A part of the plurality of mobile terminals may be in soft-handover to a non-serving cell respectively.

According to this method, the mobile terminal receives via a shared absolute grant channel a first absolute grant from the base station controlling the serving cell. An absolute grant indicates the maximum amount of uplink resources the mobile terminal is allowed to utilize for uplink data transmissions to the base station controlling serving cell and a base station controlling a non-serving cell of the mobile terminal via dedicated uplink channels and comprises information indicating whether the absolute grant is valid for mobile terminals in soft-handover only,

In this embodiment, the information in the first absolute grant indicates that the first absolute grant is valid for the plurality of mobile terminals. Therefore, the mobile terminal transmits uplink data to the base station controlling the serving cell via a dedicated uplink channel, wherein the amount of uplink resources utilized for data transmission on the dedicated uplink channel is chosen based on the maximum amount of resources indicated by the first absolute grant.

In a further embodiment of the invention the mobile terminal is not in soft-handover. In this embodiment of the invention, the mobile terminal receives a second absolute grant from the base station controlling the serving cell. The second absolute grant comprises information indicating that the second absolute grant is valid for a mobile terminal in soft-handover only. As the mobile terminal is not in soft handover, same may store the maximum amount of uplink resources indicated by the scheduling grant for uplink data transmissions in soft-handover on a storage medium, e.g. in memory.

Further, in a variation of the embodiment, upon the mobile terminal entering soft-handover to a non-serving cell the mobile terminal transmits uplink data to the base station controlling the serving cell and the base station controlling the non-serving cell via dedicated uplink channels respectively, wherein the amount of uplink resources utilized for data transmission on the dedicated uplink channels is chosen based on the stored maximum amount of resources indicated by the absolute grant.

In another variation of the embodiment, the mobile terminal enters soft-handover to the non-serving cell. The mobile terminal transmits uplink data to the base station controlling the serving cell and the base station controlling the non-serving cell utilizing an amount of uplink resources chosen based on the maximum amount of resources indicated by the first absolute grant, if no maximum of uplink resources to be used by a mobile terminal in soft-handover for the mobile terminal when entering soft-handover has been stored previously.

In a further variation of this embodiment, the second absolute grant defines a percentage of the maximum amount of resources the mobile terminal is allowed to utilize when not being in soft-handover that is to be utilized for uplink data transmissions via said dedicated channel when the mobile terminal is in soft-handover at maximum. Moreover, the mobile terminal may further use processing means, such as a DSP or processor, to determine the maximum amount of uplink resources the mobile terminal is allowed to utilize for uplink transmissions during soft-handover based on the percentage indicated in the second absolute grant.

According to another embodiment of the invention, the first absolute grant is received when the mobile terminal is in soft-handover. In this situation the mobile terminal selects the amount of uplink resources utilized for data transmission on the dedicated uplink channels to the base station controlling the serving cell and the base station controlling the non-serving cell according to the maximum amount of resources indicated in the first absolute grant, if the maximum amount of uplink resources in the first absolute grant is lower than the amount of resources currently utilized for uplink transmissions on the dedicated channels.

Generally, the absolute grant channel may be a channel shared by the mobile terminals and via which the base station controlling the serving cell transmits absolute grants to the mobile terminals.

Another embodiment of the invention provides a base station for scheduling mobile terminals in a mobile communication network. Again, a part of the plurality of mobile terminals is in soft-handover to a non-serving cell respectively.

The base station may comprise a transmitter for transmitting via a shared absolute grant channel an absolute grant to the mobile terminals. The absolute grant indicates the maximum amount of uplink resources a mobile terminal is allowed to utilize for uplink data transmissions via a dedicated uplink channel. Further, the base station may be adapted to comprise in the absolute grant information indicating that the absolute grant is valid for a mobile terminal in soft-handover only. For this purpose, the base station may for example comprise a processing means which inter alia forms the absolute grant transmitted by the base station. Further, the base station comprises a receiver for receiving uplink data from the mobile terminals in soft-handover via dedicated uplink channels, wherein the amount of resources utilized on the dedicated uplink channel has been set based on the maximum amount of resources indicated in the absolute grant.

In a further embodiment of the invention the base station comprises means adapted to perform the steps of the method for scheduling mobile terminals within a mobile communication network according to one of the various embodiments and variations above.

Another embodiment of the invention relates to a mobile terminal being responsive to the reception of absolute grants received by the mobile terminal in a mobile communication network in which a plurality of mobile terminals comprising the terminals is scheduled by a base station controlling the serving cell of the mobile terminals. A part of the plurality of mobile terminals is in soft-handover to a non-serving cell respectively.

The mobile terminal according to this embodiment comprises a receiver for receiving via a shared absolute grant channel a first absolute grant from the base station controlling the serving cell. An absolute grant indicates the maximum amount of uplink resources the mobile terminal is allowed to utilize for uplink data transmissions to the base station controlling serving cell and a base station controlling a non-serving cell of the mobile terminal via dedicated uplink channels, and comprises information indicating whether the absolute grant is valid for mobile terminals in soft-handover only.

In this embodiment, the information in the first absolute grant indicates that the first absolute grant is valid for all mobile terminals. Further the mobile terminal comprises a transmitter for transmitting uplink data to the base station controlling the serving cell via a dedicated uplink channel, wherein the amount of uplink resources utilized for data transmission on the dedicated uplink channel is chosen based on the maximum amount of resources indicated by the first absolute grant.

Another embodiment provides a mobile terminal comprising means adapted to perform the steps of the method for acting upon the reception of absolute grants received according to one of the various embodiments of the invention and variations thereof above.

One further embodiment of the invention relates to a computer readable medium storing instructions that, when executed by a processor of a base station, cause the base station to schedule mobile terminals within a mobile communication network, wherein a plurality of mobile terminals is scheduled by a base station controlling the serving cell of the mobile terminals, wherein a part of the plurality of mobile terminals is in soft-handover to a non-serving cell respectively. The base station is caused to schedule mobile terminals within a mobile communication network by transmitting via a shared absolute grant channel an absolute grant to the mobile terminals, wherein the absolute grant indicates the maximum amount of uplink resources a mobile terminal is allowed to utilize for uplink data transmissions to the base station controlling serving cell and a base station controlling a non-serving cell of the mobile terminal via dedicated uplink channels, wherein the absolute grant comprises information indicating that the absolute grant is valid for a mobile terminal in soft-handover only, and receiving uplink data from the mobile terminals in soft-handover via dedicated uplink channels, wherein the amount of resources utilized on the dedicated uplink channel has been set based on the maximum amount of resources indicated in the absolute grant.

Another embodiment of the invention provides a computer readable medium further storing instructions that, when executed by the processor of the base station, cause the base station to perform the steps of the method for scheduling mobile terminals according to one of the above-mentioned various embodiments and variations thereof.

Moreover, an embodiment of the invention relates to a computer readable medium storing instructions that, when executed by a processor of the mobile terminal, cause the mobile terminal to act upon the reception of absolute grants received by the mobile terminal within a mobile communication network in which a plurality of mobile terminals comprising the terminals is scheduled by a base station controlling the serving cell of the mobile terminals, wherein a part of the plurality of mobile terminals is in soft-handover to a non-serving cell respectively. The mobile terminal acts upon the reception of absolute grants by receiving via a shared absolute grant channel a first absolute grant from the base station controlling the serving cell, wherein an absolute grant indicates the maximum amount of uplink resources the mobile terminal is allowed to utilize for uplink data transmissions to the base station controlling serving cell and a base station controlling a non-serving cell of the mobile terminal via dedicated uplink channels, and the absolute grant comprises information indicating whether the absolute grant is valid for mobile terminals in soft-handover only and by transmitting uplink data to the base station controlling the serving cell via a dedicated uplink channel, wherein the amount of uplink resources utilized for data transmission on the dedicated uplink channel is chosen based on the maximum amount of resources indicated by the first absolute grant. In this embodiment, the information in the first absolute grant indicates that the first absolute grant is valid for the plurality of mobile terminals.

Another embodiment of the invention relates to a computer readable medium storing instructions that, when executed by the processor of the mobile terminal, cause the mobile terminal to perform the steps of the method for acting on the reception of absolute grants according to one of the various embodiments described above and variations thereof.

## BRIEF DESCRIPTION OF THE FIGURES

In the following the invention is described in more detail in reference to the attached figures and drawings. Similar or corresponding details in the figures are marked with the same reference numerals.

**Fig. 1** shows the high-level architecture of UMTS,

**Fig. 2** shows the architecture of the UTRAN according to UMTS R99/4/5,

**Fig. 3** shows a Drift and a Serving Radio Subsystem,

**Fig. 4** shows the overall E-DCH MAC architecture at a user equipment,

**Fig. 5** shows the MAC interworking in a simplified architecture at a user equipment,

**Fig. 6** shows the MAC-e/es architecture at a user equipment,

**Fig. 7** shows an overall MAC architecture in the UTRAN,

**Fig. 8** shows the MAC-e architecture at a Node B,

**Fig. 9** shows the MAC-es architecture at a S-RNC,

**Fig. 10** shows the timing relation of relative grant,

**Fig.11** shows the non-RG mode operation of a UE, and

**Fig. 12 & 13** show flow charts of the operation of a mobile terminal according to an exemplary embodiment of the invention.

## DETAILED DESCRIPTION OF THE INVENTION

The following paragraphs will describe various embodiments of the invention. For exemplary purposes only, most of the embodiments are outlined in relation to a UMTS communication system and the terminology used in the subsequent sections mainly relates to the UMTS terminology. However, the used terminology and the description of the embodiments with respect to a UMTS architecture is not intended to limit the principles and ideas of the inventions to such systems.

Also the detailed explanations given in the Technical Background section above are merely intended to better understand the mostly UMTS specific exemplary embodiments described in the following and should not be understood as limiting the invention to the described specific implementations of processes and functions in the mobile communication network.

According to an embodiment of the invention, the Node B controlling the serving cell may react on or prevent an overload situation in neighboring cells beforehand serving, by limiting the utilized resources (e.g. power ratio) of UEs which are in soft-handover and thereby contribute to the inter-cell interference. One possible solution to restrict the data rate of UEs in soft-handover (SHO) only is to indicate on the absolute grant channel (e.g. E-AGCH) shared by the UEs of the serving cell whether the signaled maximum amount of uplink resources indicated in a grant from the Node B controlling the serving cell is valid for terminals in soft-handover only.

For this purpose the currently used absolute grant structure is adapted. The absolute grant channel for E-DCH in a UMTS system presently conveys absolute grants with the following information fields:

• Maximum power ratio
• SingleProcess flag

According to an embodiment of the invention, an additional flag indicating for which UEs an absolute grant should be valid is introduced to the absolute grant. This grant indicates whether the maximum amount of uplink resources (indicated by means of the maximum power ratio) is to be used by UEs in soft-handover only or by all UEs.

The serving Node B may set the flag, when the absolute grant is indicating the power ratio, which is to be used by UEs in soft-handover for uplink transmissions to the Node B(s) controlling the serving cell and the non-serving cell. Upon having received the absolute grant message valid for UEs in SHO only, those UEs controlled only by the serving cell, which are not in soft-handover, may for example store the signaled maximum amount of uplink resources indicated by the absolute grant. When one of those UEs enters soft-handover, the stored maximum amount of uplink resources indicated by the absolute grant may be used by the UE to select the appropriate amount of uplink resources to utilize for uplink transmissions during soft-handover.

For example, if the UEs are scheduled in a RG based scheduling mode the UE sets the serving grant (SG) equal to the stored maximum amount of uplink resources, if the presently used SG is larger than the stored value. In case the stored value is larger than the resources indicated by the current SG, the UE uses the current SG for uplink data transmissions.

Considering the non-RG based scheduling mode, the UE sets the maximum serving grant (MAX SG) equal to the stored maximum amount of uplink resources, if the presently used MAX SG is larger than the stored value. In case the stored value is larger than the resources indicated by the current SG, the UE uses the current SG for uplink data transmissions.

If a maximum amount of uplink resources that may be utilized by the UEs in soft-handover has not previously configured, i.e. no value for the soft-handover situation has been stored previously, the UEs in soft-handover or entering soft-handover may proceed using the serving grant and maximum serving grant values as in non-soft-handover operation. However, upon receiving an absolute grant setting the maximum amount of uplink resources to utilize in soft-handover when a UE is already in soft-handover, the UE may immediately apply the signaled absolute grant.

The *SingleProcess* flag on the E-AGCH indicates, whether a grant is valid for only one HARQ process or for all HARQ processes. As this flag is only meaningful for the RG based scheduling mode (in the non-RG based scheduling mode all absolute grants are always to be applied for all HARQ processes), in one embodiment of the invention the flag could be reused in the non-RG based scheduling mode to indicate whether the maximum power ratio signaled in an absolute grant is valid for UEs in soft-handover only. Hence, no additional overhead to signaling would be required.

However with this solution serving cell could only indicate the SHO/non-SHO applicability of the signaled maximum power ratio for the non-RG based scheduling mode. Since in the RG based scheduling mode, the serving Node B may use dedicated relative/absolute grants for the restriction of the power ratio of SHO UEs this may not considered as a problem.

In the exemplary embodiments above, either a new flag on E-AGCH or the *SingleProcess* flag for the non-RG based scheduling mode indicates whether the grant should be used by the UEs in soft-handover only. Alternatively, according to another embodiment, the flag could also indicate whether the absolute grant should be applied for a 2ms/ 10ms TTI. The E-DCH supports both 2ms and 10ms TTIs and there is the possibility to switch between the TTIs for example depending on the coverage. According to this exemplary embodiment, a 10ms TTI may be used by UEs in soft-handover, whereas the 2ms TTI is used by UEs not in soft-handover.

RRC signaling may be another alternative to the absolute grant signaling, in order to restrict the resource utilization of UEs in soft-handover. For example, the RNC may signal to a UE entering SHO state a maximum power ratio, which it is allowed to use for the time being in SHO. This signaling could be for example incorporated in the radio link addition procedure.

The S-RNC may alternatively signal the maximum power ratio to be used in SHO to the serving Node B controlling the UE'S serving cell. Instead of indicating the maximum power ratio as an absolute value, the RNC could also signal a relative value, which indicates the percentage of the absolute grant value, the UE is allowed to use in SHO. The serving Node B may then propagate the maximum amount of resources to be utilized by UEs in SHO to the UEs as described above using an absolute grant.

Another alternative would be, that the RRC signals the maximum allowed power ratio UEs are allowed to use in soft-handover at the connection setup. The UEs would use this value by default in SHO.

One drawback of the RRC signaling compared to the absolute grant signaling is the flexibility. When using physical layer scheduling grants (E-AGCH), the soft-handover restriction could be done more dynamically, e.g. the value could be adjusted according to the load situation in neighboring cells.

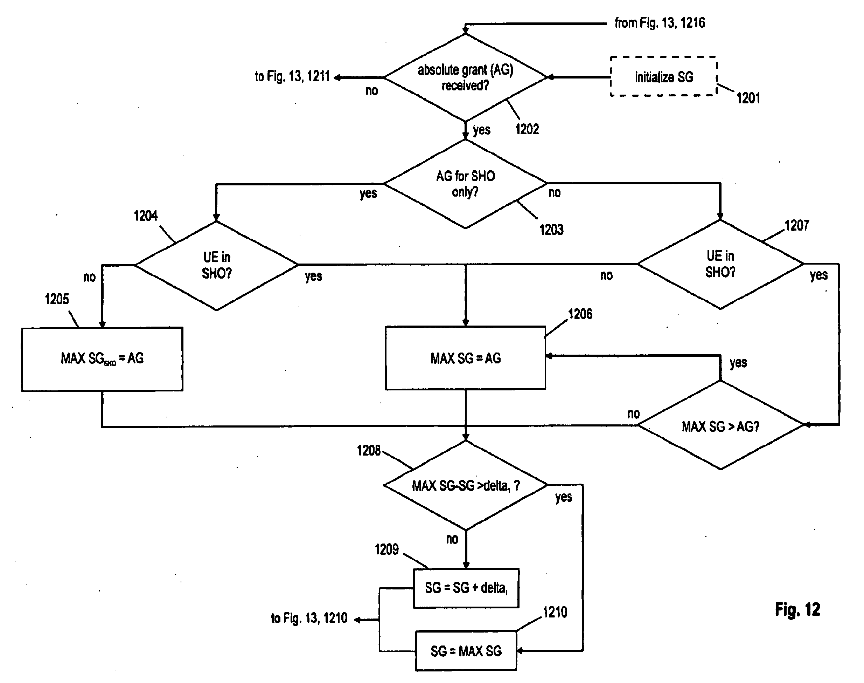

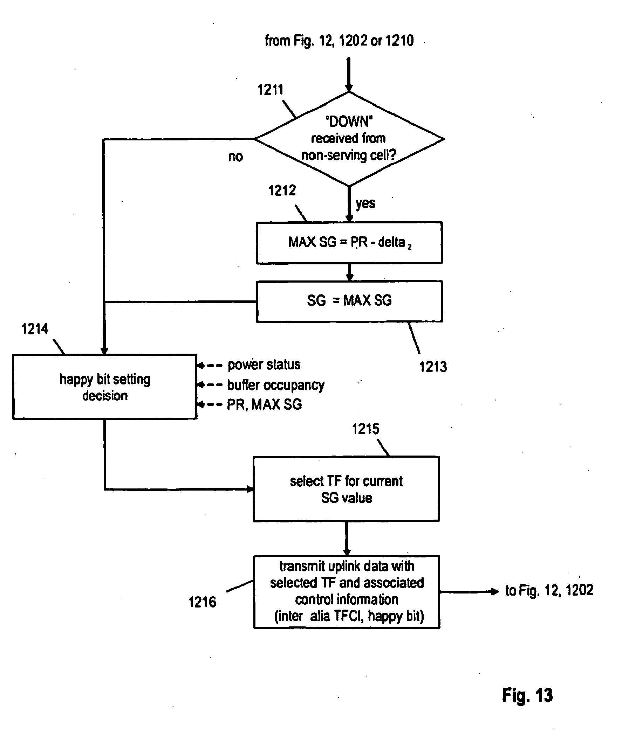

In the following an embodiment of the invention will be explained with reference to Fig. 12 and 13 showing flow charts illustrating the operation of a mobile terminal when selecting the appropriate amount of resources to utilize for communicating on a dedicated uplink channel, such as an E-DCH.

The mobile terminal maintains a state variable for every HARQ process, which indicates the amount of resources the mobile terminal is using for data transmissions on a dedicated uplink channel. Taking again an UMTS system as an example, the state variable may be used in the E-TFC selection algorithm as the maximum allowed E-DPDCH/DPCCH power ratio for the transmission of the HARQ process it refers to. This state variable may be referred to as a serving grant (SG).

The maximum serving grant (MAX SG) is another state variable for each HARQ process that denotes the maximum amount of uplink resources the mobile terminal may use for data transmissions on the uplink channel. Taking the example of transmissions via an UMTS E-DCH again, this state variable may define the maximum allowed E-DPDCH/DPCCH ratio.

According to this embodiment the maximum serving grant is controlled by the scheduling grants from serving cell. When the mobile terminal is in soft handover, i.e. is connected to a serving cell and at least one further non-serving cell, the maximum serving grant may be controlled by the serving cell and the non-serving cell.

Upon starting uplink data transmission, the mobile terminal initializes 1201 the serving grant value. As outlined previously, the current serving grant value indicates to the E-TFC selection entity, which power ratio can be used for the selection of an E-TFC for data transmission on the E-DCH when considering a UMTS system for exemplary purposes.

Further, the mobile terminal determines 1202 whether an absolute grant has been received through the serving cell, i.e. from the Node B of the serving cell responsible for scheduling the respective UE. According to this exemplary embodiment, the non-RG scheduling case is considered, i.e. the UE is only provided with absolute grants from the serving cell. These scheduling grants set the amount of resources the UE us allowed to utilize for the transmission of uplink data. When considering again the example of E-DCH transmissions, the absolute grants indicate the E-DPDCH/DPCCH power ratio.

In an alternative embodiment of the invention, the serving cell may use both, absolute grants and relative grants to specify the maximum serving grant, i.e. the maximum amount of resources the UE is allowed to utilize for uplink data transmissions on the uplink channel. In another alternative embodiment of the invention, the serving cell schedules all or a group of UEs in the cell, i.e. transmits common grants to the UEs.

If the mobile terminal has received an absolute grant, which has not yet been considered, the mobile terminal next evaluates 1203 whether a flag indicating that the absolute grant is valid for mobile terminals in soft handover only has been set.

If this is the case, i.e. the absolute grant indicates the maximum of amount of resources on the uplink a mobile terminal is allowed to utilize when in soft-handover, the handover status of the mobile terminal is determined 1204.

If the mobile terminal is presently not in soft handover, the mobile terminal may store 1205 the maximum amount of resources the mobile terminal is allowed to utilize during soft-handover AG in memory, for example in form of a state variable:

$$MAX\ SG_{SHO} = AG$$

Else, the maximum serving grant is set 1206 to the signaled resource value indicated by the absolute grant:

$$MAX\ SG = AG$$

If the absolute grant is not for mobile terminals in soft-handover only, i.e. the flag is not set in the grant, the handover status of the mobile terminal is determined 1207. If it is found that the mobile terminal is presently not in soft-handover, the maximum serving grant is set 1206 to the signaled resource value indicated by the absolute grant as described above. Else, the absolute grant message from the serving cell is ignored. In another embodiment the mobile terminal sets MAX SG to the indicates absolute grant (AG) in case the indicated maximum allowed resource in the absolute grant is smaller than the current MAX SG in the mobile terminal.

Next, the mobile terminal determines 1208, whether the serving grant may be increased by the step size delta, without exceeding the maximum serving grant. If this is the case, the mobile terminal ramps up 1209 the current serving grant value, i.e. increases the serving grant value by a configurable step ($delta_1$):

$$SG = SG + delta_1.$$

Otherwise, the mobile terminal sets 1210 the serving grant value to the maximum serving grant value.

With respect to steps 1208, 1209 and 1210, it should be noted that in an alternative embodiments of the invention, the step size ($delta_1$) may vary from between successive increments of the serving grant value. For example, in the first iteration the serving grant may be increased by $delta_1$, in the second iteration by $2\,delta_1$, etc. until the maximum serving grant value is reached. Another alternative may be to choose the step size $delta_1$ such that it equals the difference between the current maximum serving grant and the current serving grant value.

The step size $delta_1$ can be preconfigured or may be set by control signaling associated to the uplink transmissions on the dedicated uplink channel received through RRC signaling.

Next, the steps 1211, 1212 and 1212 are discussed. These steps are optional and may only be performed when the mobile terminal is in soft handover. In this situation, the mobile terminal determines 1211 whether a relative grant indicating a "DOWN" command has been received from a non-serving cell. A grant from a non-serving cell indicates to the mobile terminal to reduce its uplink resource utilization by a configurable amount.

If a relative grant has been received, the mobile terminal sets 1212 the maximum serving grant to the current last used power ratio (PR) value minus the configurable step-size ($delta_2$):

$$MAX\ SG = last\ used\ power\ ratio - delta_2$$

and sets 1213 the serving grant value to be used for E-TFC selection for data transmission in the next TTI to the new maximum serving grant value. In this embodiment, the power ratio may be considered as a measure of the uplink resources utilized for data transmission on the dedicated uplink channel.

It should be noted that the step size $delta_2$ may be individually set by means of control signaling from the serving cell and/or non-serving cell(s) or may be preconfigured. Moreover, it is not necessary that $delta_1$ and $delta_2$ are of equal values.

In the exemplary embodiment of the invention illustrated in Fig. 12 and 13, the relative grants of the non-serving cell(s) dominate the absolute grants in that the relative grants "overwrite" the maximum serving grant value in case a absolute and a relative grant have been received. This operation may be advantageous, as this operation may allow for controlling the noise rise in the non-serving cell(s) during handover.

However, it may also be advantageous to allow the absolute grants dominating the relative grants, if both have been received before a next E-TFC selection process. For this situation, essentially, steps 1211, 1212 and 1213 would need to be performed prior to steps 1202 to 1209.

Either way, upon having updated the serving grant value and the maximum serving grant value - if necessary - the mobile terminal decides 1214 whether the happy bit (resource request flag) for requesting more uplink resources should be set. As explained previously, the mobile terminal is prohibited from setting the happy bit to indicate an "unhappy" condition, as long as the mobile terminal is ramping up resource utilization, i.e. the current serving grant is lower than the maximum serving grant and is (successively) increased as explained above. The mobile terminal may only indicate an "unhappy" condition, if the mobile terminal is currently using the maximum allowed resources for transmission of uplink data.

The mobile terminal not being in soft handover may only indicate an "unhappy" condition by setting the happy bit:

■ if the power status of the mobile terminal allows for uplink data transmission via the dedicated uplink channel utilizing more uplink resources than the maximum uplink resources (MAX SG) set by the scheduling grant of the base station controlling the serving cell,

■ and if the maximum uplink resources (MAX SG) set by the scheduling grant from the base station controlling the serving cell require more than a configurable number of transmission time intervals for transmitting buffered uplink data via the dedicated uplink channel,

■ and if the mobile terminal is currently utilizing the maximum uplink resources (MAX SG = SG) set by the scheduling grant for uplink data transmission.

If the mobile terminal is in soft handover, these criteria may be redefined. In the soft handover case, the mobile terminal may set the resource request flag, i.e. indicate an "unhappy" condition

■ if the power status of the mobile terminal allows for uplink data transmission via the dedicated uplink channel utilizing more uplink resources than the maximum uplink resources (MAX SG) set by scheduling grants from the serving cell and/or the non-serving cell,

■ and if the maximum uplink resources (MAX SG) set by the scheduling grants require more than a configurable number of transmission time intervals for transmitting buffered uplink data via the dedicated uplink channel,

■ and if the mobile terminal is currently utilizing the maximum uplink resources (MAX SG = SG) set by the scheduling grants for uplink data transmission.

Upon having decided whether to request more uplink resources by setting the happy bit, the mobile terminal next selects 1215 a transport format combination (TFC) for the current serving grant value. The E-TFC selection may for example be based on logical channel priorities like in the UMTS Release '99, i.e. the UE shall maximize the transmission of higher priority data.

Upon having selected the appropriate E-TFC for the transmission of the uplink data via the dedicated uplink channel, the data is transmitted 1216 along with control information associated thereto. The control information inter alia comprise the happy bit (resource request flag) as well as a transport format combination indicator (TFCI) indicating the TFC used for transmitting the uplink data in the current TTI. Considering the example of an E-DCH uplink channel again, the uplink data are transmitted via and E-DPDCH (Enhanced Dedicated Physical Data CHannel). The control information is transmitted via the E-DPCCH (Enhanced Dedicated Physical Control CHannel) which is a physical channel used to transmit control information associated with the E-DCH.

In the soft handover case, the combination of the happy bit and the TFCI enables the Node B controlling the serving cell to recognize whether the mobile terminal has received a "DOWN" command from a non-serving cell. If the mobile terminal is ramping up its resource utilization for uplink transmissions, it is prohibited from setting the happy bit to indicate an "unhappy" condition. At the same time the TFCI will indicate a resource utilization lower than that granted by the serving cell. Hence, the Node B of the serving cells may derive from this combination of the TFCI and the happy bit that the mobile terminal is increasing its resource utilization.

When receiving a "DOWN" command from a non-serving cell, the mobile terminal will set its resource utilization according to

$$\textit{new serving grant = new maximum serving grant =}$$

$$\textit{previous used power ratio - delta}_2$$

as explained previously. Given, that the buffer status requires and the power status allows for the utilization of more uplink resources, the mobile terminal will set the happy bit to indicate an "unhappy" condition. Again, the TFCI will indicate to the Node B controlling the serving cell that the resource utilization is below that granted by the Node B. Thus, the Node B may detect based on this combination that the mobile terminal has received a "DOWN" command from a non-serving cell.

Further, it should be noted that in step 1205 the mobile terminal may store the maximum amount of resources it is allowed to utilized for uplink transmissions during soft-handover. Though not shown in the embodiment of the invention illustrated in Fig. 12 and 13, the mobile terminal may further determine before starting an iteration in step 1202, whether the mobile terminal has entered into soft-handover. If this is the case and if the mobile terminal has previously stored the maximum amount of resources it is allowed to utilized for uplink transmissions during soft-handover, the mobile terminal may set the maximum serving grant equal to this stored value:

$$\textit{MAX SG = MAX SG}_{SHO}$$

The embodiments of the invention described above have been mainly related to the non-RG based scheduling mode. However the principles outlined above and in particular the definition of the criteria for setting the happy bit may be equally applied to the RG based scheduling mode.

Another embodiment of the invention relates to the implementation of the above described various embodiments using hardware and software. It is recognized that the various above mentioned methods as well as the various logical blocks, modules, circuits described above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

**Claims**

1. A method for scheduling mobile terminals within a mobile communication network, wherein a plurality of mobile terminals is scheduled by a base station controlling the serving cell of the mobile terminals, wherein a part of the plurality of mobile terminals is in soft-handover to a non-serving cell respectively, the method comprising the following steps performed by the base station of the serving cell:

   transmitting via a shared absolute grant channel an absolute grant to the mobile terminals, wherein the absolute grant indicates the maximum amount of uplink resources a mobile terminal is allowed to utilize for uplink data transmissions to the base station controlling serving cell and a base station controlling a non-serving cell of the mobile terminal via dedicated uplink channels,

   wherein the absolute grant comprises information indicating that the absolute grant is valid for a mobile terminal in soft-handover only, and
   receiving uplink data from the mobile terminals in soft-handover via dedicated uplink channels, wherein the amount of resources utilized on the dedicated uplink channel has been set based on the maximum amount of resources indicated in the absolute grant.

2. The method according to claim 1, wherein the base station schedules the mobile terminals in a common rate control mode, in which all mobile terminals receive and evaluate absolute grants received via the shared absolute grant channel.

3. The method according to claim 2, wherein the absolute grant consists of a power ratio indicating the maximum amount of uplink resources each of the mobile terminals is allowed to utilize and the flag indicating whether the absolute grant is valid for a mobile terminal in soft-handover only.

4. The method according to claim 2, wherein the mobile terminals in soft-handover are scheduled with another transmission time interval than mobile terminals not in soft-handover, and
   wherein the absolute grant consists of a power ratio indicating the maximum amount of uplink resources each of the mobile terminals is allowed to utilize and a flag indicating the transmission time interval of uplink data transmissions for which the absolute grant is valid.

5. The method according to claim 1, wherein the base station schedules the mobile terminals in a dedicated rate control mode, in which the base station transmits absolute grants addressing either one mobile terminal of the plurality of mobile terminals, a group of said plurality of mobile terminals or all of the plurality of mobile terminals.

6. The method according to claim 1, 2 or 5, wherein the absolute grant consists of a power ratio indicating the maximum amount of uplink resources the addressed mobile terminal is or the addressed mobile terminals are allowed to utilize, a single process flag indicating whether the absolute grant is valid for one of a plurality of HARQ processes only and the flag indicating whether the absolute grant is valid for a mobile terminal in soft-handover only.

7. The method according to claim 3 or 6, wherein the maximum amount of resources the mobile terminals are to be allowed to utilize during soft-handover is indicated by the absolute grant in form of a percentage defining how many percent of the maximum uplink resources a mobile terminal utilizes when not in handover is to be utilized at maximum by a mobile terminal in soft-handover.

8. The method according to one of claims 1 to 7, further comprising the step of receiving from the radio network controller information indicating the maximum amount of resources the mobile terminals are to be allowed to utilize during handover.

9. The method according to claim 7, wherein the maximum amount of resources the mobile terminals are to be allowed to utilize during handover is indicated in form of a percentage defining how many percent of the maximum uplink resources a mobile terminal utilizes when not in handover is to be utilized at maximum by a mobile terminal in soft-handover

10. The method according to one of claim 1 to 7, wherein the further comprising the steps of:

   receiving from a mobile terminal in soft-handover uplink data via a dedicated uplink channel and associated control information via dedicated uplink control channel,

   wherein the control information comprises a resource request flag that, when set by the mobile terminal, requests the base station controlling the serving cell to increase the uplink resources for uplink data transmissions and wherein the control information further comprise transport format indicator indicating the transport format combination used for transmitting uplink data to the base station controlling the serving cell within a transmission time interval, detecting by the base station whether the resource request flag is set and whether the transport format indicator indicates a transport format combination utilizing a lower amount of uplink resources than allowed by the base station of the serving cell in the absolute grant valid for a mobile terminal in soft-handover only, and if so, transmitting to the mobile terminal another absolute grant, wherein the absolute grant indicates the maximum amount of uplink resources a mobile terminal is allowed to utilize for uplink data transmissions to the base station controlling serving cell and a base station controlling a non-serving cell of the mobile terminal via dedicated uplink channels,
   wherein the maximum amount of resources indicated in the absolute grant is lower than the maximum amount of uplink resources the mobile terminals in soft-handover are currently allowed to use, and
   wherein the absolute grant comprises information indicating that the absolute grant is valid for a mobile terminal in soft-handover only.

11. A method for acting upon the reception of absolute grants received by a mobile terminal within a mobile communication network in which a plurality of mobile terminals comprising the terminal is scheduled by a base station controlling the serving cell of the mobile terminals, wherein a part of the plurality of mobile terminals is in soft-handover to a non-serving cell respectively, the method comprising the following steps performed by the mobile terminal:

   receiving via a shared absolute grant channel a first absolute grant from the base station controlling the serving cell, wherein an absolute grant indicates the maximum amount of uplink resources the mobile terminal is allowed to utilize for uplink data transmissions to the base station controlling serving cell and a base station controlling a non-serving cell of the mobile terminal via dedicated uplink channels, and the absolute grant comprises information indicating whether the absolute grant is valid for mobile terminals in soft-handover only,

   wherein the information in the first absolute grant indicate that the first absolute grant is valid for the plurality of mobile terminals, and
   transmitting uplink data to the base station controlling the serving cell via a dedicated uplink channel, wherein the amount of uplink resources utilized for data transmission on the dedicated uplink channel is chosen based on the maximum amount of resources indicated by the first absolute grant.

12. The method according to claim 11, wherein the mobile terminal is not in soft-handover and the method further comprises the steps of:

   receiving a second absolute grant from the base station controlling the serving cell, wherein the second absolute grant comprises information indicating that the second absolute grant is valid for a mobile terminal in soft-handover only, and
   storing the maximum amount of uplink resources indicated by the scheduling grant for uplink data transmissions in soft-handover.

EP 1 708 523 B1

13. The method according to claim 12, further comprising the step of transmitting uplink data to the base station controlling the serving cell and the base station controlling the non-serving cell via dedicated uplink channels respectively, wherein the amount of uplink resources utilized for data transmission on the dedicated uplink channels is chosen based on the stored maximum amount of resources indicated by the absolute grant upon the mobile terminal entering soft-handover to a non-serving cell.

14. The method according to claim 12 or 13, wherein upon the mobile terminal entering soft-handover to the non-serving cell, the mobile terminal transmits uplink data to the base station controlling the serving cell and the base station controlling the non-serving cell utilizing an amount of uplink resources chosen based on the maximum amount of resources indicated by the first absolute grant, if no maximum of uplink resources to be used by a mobile terminal in soft-handover for the mobile terminal when entering soft-handover has been stored previously.

15. The method according to one of claims 12 to 14, wherein the second absolute grant defines a percentage of the maximum amount of resources the mobile terminal is allowed to utilize when not being in soft-handover that is to be utilized for uplink data transmissions via said dedicated channel when the mobile terminal is in soft-handover at maximum, and
the method further comprises the step of determining the maximum amount of uplink resources the mobile terminal is allowed to utilize for uplink transmissions during soft-handover based on the percentage indicated in the second absolute grant.

16. The method according to claim 11, wherein the first absolute grant is received when the mobile terminal is in soft-handover, and the method further comprising the step of choosing the amount of uplink resources utilized for data transmission on the dedicated uplink channels to the base station controlling the serving cell and the base station controlling the non-serving cell according to the maximum amount of resources indicated in the first absolute grant, if the maximum amount of uplink resources in the first absolute grant is lower than the amount of resources currently utilized for uplink transmissions on the dedicated channels.

17. The method according to one of claims 1 to 16, wherein the absolute grant channel is a channel shared by the mobile terminals and via which the base station controlling the serving cell transmits absolute grants to the mobile terminals.

18. A base station for scheduling mobile terminals in a mobile communication network, wherein a part of the plurality of mobile terminals is in soft-handover to a non-serving cell respectively, the base station comprising:

a transmitter for transmitting via a shared absolute grant channel an absolute grant to the mobile terminals, wherein the absolute grant indicates the maximum amount of uplink resources a mobile terminal is allowed to utilize for uplink data transmissions to the base station controlling serving cell and a base station controlling a non-serving cell of the mobile terminal via a dedicated uplink channel,
the base station is adapted to comprise in the absolute grant information indicating that the absolute grant is valid for a mobile terminal in soft-handover only and
the base station further comprises a receiver for receiving uplink data from the mobile terminals in soft-handover via dedicated uplink channels, wherein the amount of resources utilized on the dedicated uplink channel has been set based on the maximum amount of resources indicated in the absolute grant.

19. The base station according to claim 18, further comprising means adapted to perform the steps of the method according to one of claims 1 to 10.

20. A mobile terminal being responsive to the reception of absolute grants received by the mobile terminal in a mobile communication network in which a plurality of mobile terminals comprising the terminal is scheduled by a base station controlling the serving cell of the mobile terminals, wherein a part of the plurality of mobile terminals is in soft-handover to a non-serving cell respectively, the mobile terminal comprising:

a receiver for receiving via a shared absolute grant channel a first absolute grant from the base station controlling the serving cell, wherein an absolute grant indicates the maximum amount of uplink resources the mobile terminal is allowed to utilize for uplink data transmissions to the base station controlling serving cell and a base station controlling a non-serving cell of the mobile terminal via dedicated uplink channels, and the absolute grant comprises information indicating whether the absolute grant is valid for mobile terminals in soft-handover only,

wherein the information in the first absolute grant indicate that the first absolute grant is valid for all mobile terminals, and

a transmitter for transmitting uplink data to the base station controlling the serving cell via a dedicated uplink channel, wherein the amount of uplink resources utilized for data transmission on the dedicated uplink channel is chosen based on the maximum amount of resources indicated by the first absolute grant.

21. The mobile terminal according to claim 20, further comprising means adapted to perform the steps of the method according to one of claims 11 to 17.

22. A computer readable medium storing instructions that, when executed by a processor of a base station, cause the base station to schedule mobile terminals within a mobile communication network, wherein a plurality of mobile terminals is scheduled by a base station controlling the serving cell of the mobile terminals, wherein a part of the plurality of mobile terminals is in soft-handover to a non-serving cell respectively, by:

transmitting via a shared absolute grant channel an absolute grant to the mobile terminals, wherein the absolute grant indicates the maximum amount of uplink resources a mobile terminal is allowed to utilize for uplink data transmissions to the base station controlling serving cell and a base station controlling a non-serving cell of the mobile terminal via dedicated uplink channels,

wherein the absolute grant comprises information indicating that the absolute grant is valid for a mobile terminal in soft-handover only, and

receiving uplink data from the mobile terminals in soft-handover via dedicated uplink channels, wherein the amount of resources utilized on the dedicated uplink channel has been set based on the maximum amount of resources indicated in the absolute grant.

23. The computer readable medium according to claim 22, further storing instructions that, when executed by the processor of the base station, cause the base station to perform the steps of the method according to one of claims 1 to 10.

24. A computer readable medium storing instructions that, when executed by a processor of the mobile terminal, cause the mobile terminal to act upon the reception of absolute grants received by the mobile terminal within a mobile communication network in which a plurality of mobile terminals comprising the terminal is scheduled by a base station controlling the serving cell of the mobile terminals, wherein a part of the plurality of mobile terminals is in soft-handover to a non-serving cell respectively, by:

receiving via a shared absolute grant channel a first absolute grant from the base station controlling the serving cell, wherein an absolute grant indicates the maximum amount of uplink resources the mobile terminal is allowed to utilize for uplink data transmissions to the base station controlling serving cell and a base station controlling a non-serving cell of the mobile terminal via dedicated uplink channels, and the absolute grant comprises information indicating whether the absolute grant is valid for mobile terminals in soft-handover only,

wherein the information in the first absolute grant indicate that the first absolute grant is valid for the plurality of mobile terminals, and

transmitting uplink data to the base station controlling the serving cell via a dedicated uplink channel, wherein the amount of uplink resources utilized for data transmission on the dedicated uplink channel is chosen based on the maximum amount of resources indicated by the first absolute grant.

25. The computer readable medium according to claim 24, further storing instructions that, when executed by the processor of the mobile terminal, cause the mobile terminal to perform the steps of the method according to one of claims 11 to 17.

**Patentansprüche**

1. Verfahren zum Durchführen eines Scheduling von Mobil-Endgeräten innerhalb eines Mobilkommunikations-Netzwerks, bei dem eine Vielzahl von Mobil-Endgeräten durch eine Basisstation koordiniert werden, die die Serving Cell der Mobil-Endgeräte steuert, wobei sich ein Teil der Vielzahl von Mobil-Endgeräten jeweils im Soft-Handover zu einer Non-Serving-Cell befindet, und das Verfahren die folgenden Schritte umfasst, die durch die Basisstation der Serving Cell durchgeführt wird:

Senden eines Absolute Grant an die Mobil-Endgeräte über einen gemeinsam genutzten Absolut-Grant-Kanal, wobei der Absolute Grant die maximale Menge an Uplink-Ressourcen anzeigt, die ein Mobil-Endgerät für Uplink-Datensendevorgänge zu der Basisstation, die die Serving Cell steuert, und einer Basisstation, die eine Non-Serving Cell des Mobil-Endgerätes steuert, über dedizierte Uplink-Kanäle nutzen darf,

wobei der Absolut Grant Informationen umfasst, die anzeigen, dass der Absolut Grant nur für ein Mobil-Endgerät im Soft-Handover gültig ist, und

Empfangen von Uplink-Daten von den Mobil-Endgeräten im Soft-Handover über dedizierte Uplink-Kanäle, wobei die Menge an Ressourcen, die auf dem dedizierten Uplink-Kanal genutzt wird, auf Basis der maximalen Menge an Ressourcen festgelegt worden ist, die von den Absolut Grant angezeigt werden.

2. Verfahren nach Anspruch 1, wobei die Basisstation ein Scheduling der Mobil-Endgeräte in einem Common-Rate-Steuermodus (common rate control mode) durchführt, in dem alle Mobil-Endgeräte Absolut Grants empfangen und auswerten, die über den gemeinsam genutzten Absolut-Grant-Kanal empfangen werden.

3. Verfahren nach Anspruch 2, wobei der Absolut Grant aus einem Leistungsverhältnis, das die maximale Menge an Uplink-Ressourcen anzeigt, die jedes der Mobil-Endgeräte nutzen darf, und dem Flag besteht, das anzeigt, ob der Absolut Grant nur für ein Mobil-Endgerät im Soft-Handover gültig ist.

4. Verfahren nach Anspruch 2, wobei das Scheduling der Mobil-Endgeräte im Soft-Handover mit einem anderen Sendezeitintervall durchgeführt wird als das der Mobil-Endgeräte, die sich nicht im Soft-Handover befinden, und wobei der Absolut Grant aus einem Leistungsverhältnis, das die maximale Menge an Uplink-Ressourcen anzeigt, die jedes der Mobil-Endgeräte nutzen darf, und einem Flag besteht, das das Sendezeitintervall von Uplink-Datensendevorgängen anzeigt, für die der Absolut Grant gültig ist.

5. Verfahren nach Anspruch 1, wobei die Basisstation ein Scheduling der Mobil-Endgeräte in einem Dedicated-Rate-Steuermodus (dedicated rate control mode) durchführt, in dem die Basisstation Absolut Grants sendet, die entweder an ein Mobil-Endgerät der Vielzahl von Mobil-Endgeräten, eine Gruppe der Vielzahl von Mobil-Endgeräten oder alle der Vielzahl von Mobil-Endgeräten adressiert sind.

6. Verfahren nach Anspruch 1, 2 oder 5, wobei der Absolut Grant aus einem Leistungsverhältnis, das die maximale Länge an Uplink-Ressourcen anzeigt, die das adressierte Mobil-Endgerät oder die adressierten Mobil-Endgeräte nutzen darf/dürfen, einem einzelnen Prozess-Flag, das anzeigt, ob der Absolut Grant nur für einen einer Vielzahl von HARQ-Prozessen gültig ist, und aus dem Flag besteht, das anzeigt, ob der Absolut Grant nur für ein Mobil-Endgerät im Soft-Handover gültig ist.

7. Verfahren nach Anspruch 3 oder 6, wobei die maximale Menge an Ressourcen, die die Mobil-Endgeräte im Soft-Handover nutzen dürfen, durch den Absolut Grant in Form eines Prozentsatzes angezeigt wird, der definiert, wie viel Prozent der maximalen Uplink-Ressourcen, die ein Mobil-Endgerät nutzt, wenn es sich nicht im Handover befindet, maximal durch ein Mobil-Endgerät im Soft-Handover zu nutzen sind.

8. Verfahren nach einem der Ansprüche 1 bis 7, das des Weiteren den Schritt des Empfangens von Informationen von dem Radio Network Controller umfasst, die die maximale Menge an Ressourcen anzeigen, die die Mobil-Endgeräte im Handover nutzen dürfen.

9. Verfahren nach Anspruch 7, wobei die maximale Menge an Ressourcen, die die Mobil-Endgeräte im Handover nutzen dürfen, in Form eines Prozentsatzes angezeigt wird, der definiert, wie viel Prozent der maximalen Uplink-Ressourcen, die ein Mobil-Endgerät nutzt, wenn es sich nicht in Handover befindet, maximal durch ein Mobil-Endgerät im Soft-Handover zu nutzen sind.

10. Verfahren nach einem der Ansprüche 1 bis 7, wobei es des Weiteren die folgenden Schritte umfasst:

Empfangen von Uplink-Daten über einen dedizierten Uplink-Kanal und dazugehöriger Steuerinformationen über einen dedizierten Uplink-Steuerkanal von einem Mobil-Endgerät im Soft-Handover,

wobei die Steuerinformationen ein Ressourcenanforderungs-Flag umfassen, das, wenn es von dem Mobil-Endgerät gesetzt wird, die Basisstation auffordert, die Serving Cell so zu steuern, dass mehr Uplink-Ressourcen für Uplink-Datensendevorgänge zur Verfügung gestellt werden, und

wobei die Steuerinformationen des Weiteren einen Transportformat-Indikator (transport format indicator) umfassen, der die Transportformat-Kombination (transport format combination) anzeigt, die zum Senden von Uplink-Daten zu der Basisstation, die die Serving Cell steuert, innerhalb eines Sendezeitintervalls verwendet wird,

Erfassen durch die Basisstation, ob das Ressourcenanforderungs-Flag gesetzt ist, und ob der Transportformat-Indikator eine Transportformat-Kombination anzeigt, die eine geringere Menge an Uplink-Ressourcen nutzt als durch die Basisstation der Serving Cell in dem Absolut Grant nur für ein Mobil-Endgerät im Soft-Handover zugelassen wird, und

wenn dies der Fall ist, Senden eines anderen Absolut Grant an das Mobil-Endgerät,

wobei der Absolut Grant die maximale Menge an Uplink-Ressourcen anzeigt, die ein Mobil-Endgerät für Uplink-Datensendevorgänge über dedizierte Uplink-Kanäle zu der Basisstation, die die Serving Cell steuert, und einer Basisstation, die eine Non-Serving Cell des Mobil-Endgerätes steuert, nutzen darf,

wobei die maximale Menge an Ressourcen, die durch den Absolut Grant angezeigt wird, geringer ist als die maximale Menge an Uplink-Ressourcen, die die Mobil-Endgeräte im Soft-Handover aktuell verwenden dürfen, und

wobei der Absolut Grant Informationen umfasst, die anzeigen, dass der Absolut Grant nur für ein Mobil-Endgerät im Soft-Handover gültig ist.

11. Verfahren zum Reagieren auf den Empfang von Absolut Grants, die durch ein Mobil-Endgerät innerhalb eines Mobil-Kommunikations-Netzwerks empfangen werden, in dem ein Scheduling einer Vielzahl von Mobil-Endgeräten, die Endgerät umfasst, durch eine Basisstation durchgeführt wird, die die Serving Cell der Mobil-Endgeräte steuert, wobei sich ein Teil der Vielzahl von Mobil-Endgeräten sich jeweils im Soft-Handover zu einer Non-Serving Cell befindet, und das Verfahren die folgenden Schritte umfasst, die durch das Mobil-Endgerät durchgeführt werden:

Empfangen eines ersten Absolut Grant von der Basisstation, die die Serving Cell steuert, über einen gemeinsam genutzten Absolut-Grant-Kanal, wobei ein Absolut Grant die maximale Menge an Uplink-Ressourcen anzeigt, die das Mobil-Endgerät für Uplink-Datensendevorgänge zu der Basisstation, die die Serving Cell steuert, und einer Basisstation, die eine Non-Serving Cell des Mobil-Endgerätes steuert, über dedizierte Uplink-Kanäle nutzen darf, und der Absolut Grant Informationen umfasst, die anzeigen, ob der Absolut Grant nur für Mobil-Endgeräte im Soft-Handover gültig ist,

wobei die Informationen in dem ersten Absolut Grant anzeigen, dass der erste Absolut Grant für die Vielzahl von Mobil-Endgeräten gültig ist, und

Senden von Uplink-Daten zu der Basisstation, die die Serving Cell steuert, über einen dedizierten Uplink-Kanal, wobei die Menge an Uplink-Ressourcen, die für das Senden von Daten auf dem dedizierten Uplink-Kanal genutzt wird, auf Basis der maximalen Menge an Ressourcen ausgewählt wird, die durch den ersten Absolut Grant angezeigt wird.

12. Verfahren nach Anspruch 11, wobei sich das Mobil-Endgerät nicht im Soft-Handover befindet und das Verfahren des Weiteren die folgenden Schritte umfasst:

Empfangen eines zweiten Absolut Grant von der Basisstation, die die Serving Cell steuert, wobei der zweite Absolut Grant Informationen umfasst, die anzeigen, dass der zweite Absolut Grant nur für ein Mobil-Endgerät im Soft-Handover gültig ist, und

Speichern der maximalen Menge an Uplink-Ressourcen, die durch den Scheduling-Grant für Uplink-Datensendevorgänge im Soft-Handover angezeigt wird.

13. Verfahren nach Anspruch 12, das des Weiteren den Schritt des Sendens von Uplink-Daten zu der Basisstation, die die Serving Cell steuert, und der Basisstation, die die Non-Serving Cell steuert, über jeweilige dedizierte Uplink-Kanäle umfasst, wobei die Menge an Uplink-Ressourcen, die zum Senden von Daten auf den dedizierten Uplink-Kanälen genutzt werden, auf Basis der gespeicherten maximalen Menge an Ressourcen ausgewählt wird, die durch den Absolut Grant angezeigt wird, wenn das Mobil-Endgerät in einen Soft-Handover zu einer Non-Serving Cell eintritt.

14. Verfahren nach Anspruch 12 oder 13, wobei, wenn das Mobil-Endgerät in einen Soft-Handover zu der Non-Serving Cell eintritt, das Mobil-Endgerät Uplink-Daten zu der Basisstation, die die Serving Cell steuert, und der Basisstation, die die Non-Serving Cell steuert, unter Verwendung einer Menge an Uplink-Ressourcen sendet, die auf Basis der maximalen Menge an Ressourcen ausgewählt wird, die durch den ersten Absolut Grant angezeigt wird, wenn kein Maximum an Uplink-Ressourcen, die durch ein Mobil-Endgerät im Soft-Handover zu verwenden sind, zuvor für das Mobil-Endgerät beim Eintreten in der Soft-Handover gespeichert worden ist.

15. Verfahren nach einem der Ansprüche 12 bis 14, wobei der zweite Absolut Grant einen Prozentsatz der maximalen Menge an Ressourcen definiert, die das Mobil-Endgerät nutzen darf, wenn es sich nicht im Soft-Handover befindet, der für Uplink-Datensendevorgänge über den dedizierten Kanal maximal zu nutzen ist, wenn sich das Mobil-Endgerät im Soft-Handover befindet, und
das Verfahren des Weiteren den Schritt des Bestimmens der maximalen Menge an Uplink-Ressourcen, die das Mobil-Endgerät für Uplink-Sendevorgänge im Soft-Handover nutzen darf, auf Basis des in dem zweiten Absolut Grant angezeigten Prozentsatzes umfasst.

16. Verfahren nach Anspruch 11, wobei der erste Absolut Grant empfangen wird, wenn sich das Mobil-Endgerät im Soft-Handover befindet, und das Verfahren des Weiteren den Schritt des Auswählens der Menge an Uplink-Ressourcen umfasst, die zum Senden von Daten auf den dedizierten Uplink-Kanälen zu der Basisstation, die die Serving Cell steuert, und der Basisstation, die die Non-Serving Cell steuert, genutzt wird, entsprechend der in dem ersten Absolut Grant angezeigten maximalen Menge an Ressourcen umfasst, wenn die maximale Menge an Uplink-Ressourcen in dem ersten Absolut Grant geringer ist als die Menge an Ressourcen, die aktuell für Uplink-Sendevorgänge auf den dedizierten Kanälen genutzt werden.

17. Verfahren nach einem der Ansprüche 1 bis 16, wobei der Absolut-Grant-Kanal ein Kanal ist, der von den Mobil-Endgeräten gemeinsam genutzt wird, und über den die Basisstation, die die Serving Cell steuert, Absolut Grants an die Mobil-Endgeräten sendet.

18. Basisstation zum Durchführen eines Scheduling von Mobil-Endgeräten in einem Mobil-Kommunikations-Netzwerk, wobei ein Teil der Vielzahl von Mobil-Endgeräten sich jeweils im Soft-Handover zu einer Non-Serving Cell befindet und die Basisstation umfasst:

eine Sendeeinrichtung zum Senden eines Absolut Grants an die Mobil-Endgeräten über einen gemeinsam genutzten Absolut-Grant-Kanal, wobei der Absolut Grant die maximale Menge an Uplink-Ressourcen anzeigt, die ein Mobil-Endgerät für Uplink-Datensendevorgänge zu der Basisstation, die die Serving Cell steuert, und einer Basisstation, die eine Non-Serving Cell des Mobil-Endgerätes steuert, über einen dedizierten Uplink-Kanal nutzen darf,

wobei die Basisstation so eingerichtet ist, dass in dem Absolut Grant Informationen enthalten sind, die anzeigen, dass der Absolut Grant nur für ein Mobil-Endgerät im Soft-Handover gültig ist, und
die Basisstation des Weiteren eine Empfangseinrichtung zum Empfangen von Uplink-Daten von den Mobil-Endgeräten im Soft-Handover über dedizierte Uplink-Kanäle umfasst, wobei die Menge an Ressourcen, die auf dem dedizierten Uplink-Kanal genutzt wird, auf Basis der in dem Absolut Grant angezeigten maximalen Menge an Ressourcen festgelegt worden ist.

19. Basisstation nach Anspruch 18, die des Weiteren eine Einrichtung umfasst, die zum Durchführen der Schritte des Verfahrens nach einem der Ansprüche 1 bis 10 eingerichtet ist.

20. Mobil-Endgerät, das auf den Empfang von Absolut Grants reagiert, die durch das Mobil-Endgerät in einem Mobil-Kommunikations-Netzwerk empfangen werden, in dem ein Scheduling einer Vielzahl von Mobil-Endgeräten, die das Endgerät umfasst, durch eine Basisstation durchgeführt wird, die die Serving Cell der Mobil-Endgeräte steuert, wobei sich ein Teil der Vielzahl von Mobil-Endgeräten jeweils im Soft-Handover zu einer Non-Serving Cell befindet und das Mobil-Endgerät umfasst:

eine Empfangseinrichtung zum Empfangen eines ersten Absolut Grant von der Basisstation, die die Serving Cell steuert, über einen gemeinsam genutzten Absolut-Grant-Kanal, wobei ein Absolut Grant die maximale Menge an Uplink-Ressourcen anzeigt, die das Mobil-Endgerät für Uplink-Datensendevorgänge zu der Basisstation, die die Serving Cell steuert, und einer Basisstation, die eine Non-Serving Cell des Mobil-Endgerätes steuert, über dedizierte Uplink-Kanäle nutzen darf, und der Absolut Grant Informationen umfasst, die anzeigen, ob der Absolut Grant nur für Mobil-Endgeräte im Soft-Handover gültig ist,

wobei die Informationen in dem ersten Absolut Grant anzeigen, dass der erste Absolut Grant für alle Mobil-Endgeräte gültig ist, und
eine Sendeeinrichtung zum Senden von Uplink-Daten zu der Basisstation, die die Serving Cell steuert, über einen dedizierten Uplink-Kanal, wobei die Menge an Uplink-Ressourcen, die für das Senden von Daten auf dem dedizierten Uplink-Kanal genutzt wird, auf Basis der durch den ersten Absolut Grant angezeigten maximalen Menge an Ressourcen ausgewählt wird.

21. Mobil-Endgerät nach Anspruch 20, das des Weiteren eine Einrichtung umfasst, die zum Durchführen der Schritte des Verfahrens nach einem der Ansprüche 11 bis 17 eingerichtet ist.

22. Computerlesbares Medium, das Befehle speichert, die, wenn sie von einer Verarbeitungseinrichtung einer Basisstation ausgeführt werden, die Basisstation veranlassen, ein Scheduling von Mobil-Endgeräten innerhalb eines Mobil-KommunikationsNetzwerkes durchzuführen, wobei ein Scheduling einer Vielzahl von Mobil-Endgeräten durch eine Basisstation durchgeführt wird, die die Serving Cell der Mobil-Endgeräte steuert, und sich dabei ein Teil der Mobil-Endgeräte jeweils im Soft-Handover zu einer Non-Serving Cell befindet, indem:

    ein Absolut Grant über einen gemeinsam genutzten Absolut-Grant-Kanal an die Mobil-Endgeräte gesendet wird, wobei der Absolut Grant die maximale Menge an Uplink-Ressourcen anzeigt, die ein Mobil-Endgerät für Uplink-Datensendevorgänge zu der Basisstation, die die Serving Cell steuert, und einer Basisstation, die eine Non-Serving Cell des Mobil-Endgerätes steuert, über dedizierte Uplink-Kanäle nutzen darf,

    wobei der Absolut Grant Informationen umfasst, die anzeigen, dass der Absolut Grant nur für ein Mobil-Endgeräte im Soft-Handover gültig ist, und
    Uplink-Daten von dem Mobil-Endgeräten im Soft-Handover über dedizierte Uplink-Kanäle empfangen werden, wobei die auf dem dedizierten Uplink-Kanal genutzte Menge an Ressourcen auf Basis der in dem Absolut Grant angezeigten maximalen Menge an Ressourcen festgelegt worden ist.

23. Computerlesbares Medium nach Anspruch 22, das des Weiteren Befehle speichert, die, wenn sie durch die Verarbeitungseinrichtung der Basisstation ausgeführt werden, die Basisstation veranlassen, die Schritte des Verfahrens nach einem der Ansprüche 1 bis 10 durchzuführen.

24. Computerlesbares Medium, das Befehle speichert, die, wenn sie von einer Verarbeitungseinrichtung des Mobil-Endgerätes ausgeführt werden, das Mobil-Endgerät veranlassen, auf dem Empfang von Absolut Grants zu reagieren, die durch das Mobil-Endgerät innerhalb einem Mobil-Kommunikations-Netzwerks empfangen werden, in dem ein Scheduling einer Vielzahl von Mobil-Endgeräten, die das Endgerät umfasst, durch eine Basisstation durchgeführt wird, die die Serving Cell der Mobil-Endgeräte steuert, und sich dabei ein Teil der Vielzahl von Mobil-Endgeräten jeweils in Soft-Handover zu einer Non-Serving Cell befindet, indem:

    über einen gemeinsam genutzten Absolut-Grant-Kanal ein erster Absolut Grant von der Basisstation empfangen wird, die die Serving Cell steuert, wobei ein Absolut Grant die maximale Menge an Uplink-Ressourcen anzeigt, die das Mobil-Endgerät für Uplink-Datensendevorgänge zu der Basisstation, die die Serving Cell steuert, und einer Basisstation, die eine Non-Serving Cell des Mobil-Endgerätes steuert, über dedizierte Uplink-Kanäle nutzen darf, und der Absolut Grant Informationen umfasst, die anzeigen, ob der Absolut Grant nur für Mobil-Endgeräte im Soft-Handover gültig ist,

    wobei die Informationen in dem ersten Absolut Grant anzeigen, dass der erste Absolut Grant für die Vielzahl von Mobil-Endgeräten gültig ist, und
    Uplink-Daten zu der Basisstation, die die Serving Cell steuert, über einen dedizierten Uplink-Kanal gesendet werden, wobei die für das Senden von Daten auf dem dedizierten Uplink-Kanal genutzte Menge an Uplink-Ressourcen auf Basis der durch den ersten Absolut Grant angezeigten maximalen Menge an Ressourcen ausgewählt wird.

25. Computerlesbares Medium nach Anspruch 24, das des Weiteren Befehle speichert, die, wenn sie von der Verarbeitungseinrichtung des Mobil-Endgerätes ausgeführt werden, das Mobil-Endgerät veranlassen, die Schritte des Verfahrens nach einem der Ansprüche 11 bis 17 durchzuführen.

**Revendications**

1. Procédé permettant d'ordonnancer des terminaux mobiles dans un réseau de communications mobile, dans lequel une pluralité de terminaux mobiles est ordonnancée par une station de base qui commande la cellule en service des terminaux mobiles, dans lequel une partie de la pluralité de terminaux mobiles est en transfert intercellulaire sans coupure vers une cellule n'étant pas en service, respectivement, le procédé comprenant les étapes suivantes exécutées par la station de base de la cellule en service :

transmettre par l'intermédiaire d'un canal d'autorisation absolue partagé une autorisation absolue aux terminaux mobiles, l'autorisation absolue indiquant la quantité maximum de ressources de liaison montante qu'un terminal mobile est autorisé à utiliser pour des transmissions de données de liaison montante à la station de base qui commande la cellule en service et à une station de base qui commande une cellule n'étant pas en service du terminal mobile , par l'intermédiaire de canaux de liaison montante dédiés,

dans lequel l'autorisation absolue comprend des informations indiquant que l'autorisation absolue est valide pour un terminal mobile en transfert intercellulaire sans coupure uniquement, et
recevoir des données de liaison montante en provenance des terminaux mobiles en transfert intercellulaire sans coupure, par l'intermédiaire de canaux de liaison montante dédiés, la quantité de ressources utilisée sur le canal de liaison montante dédié a été établie en fonction de la quantité maximum de ressources indiquée dans l'autorisation absolue.

2. Procédé selon la revendication 1, dans lequel la station de base ordonnance les terminaux mobiles dans un mode de commande de débit commun, dans lequel tous les terminaux mobiles reçoivent et évaluent les autorisations absolues reçues par l'intermédiaire du canal d'autorisation absolue partagé.

3. Procédé selon la revendication 2, dans lequel l'autorisation absolue consiste en un rapport de puissance indiquant la quantité maximum de ressources de liaison montante que chacun des terminaux mobiles est autorisé à utiliser et le drapeau indiquant si l'autorisation absolue est valide pour un terminal mobile en transfert intercellulaire sans coupure uniquement.

4. Procédé selon la revendication 2, dans lequel les terminaux mobiles en transfert intercellulaire sans coupure sont ordonnancés avec un autre intervalle de temps de transmission que les terminaux mobiles n'étant pas en transfert intercellulaire sans coupure, et
dans lequel l'autorisation absolue consiste en un rapport de puissance indiquant la quantité maximum de ressources de liaison montante que chacun des terminaux mobiles est autorisé à utiliser et un drapeau indiquant l'intervalle de temps de transmission des transmissions de données de liaison montante pour lesquelles l'autorisation absolue est valide.

5. Procédé selon la revendication 1, dans lequel la station de base ordonnance les terminaux mobiles dans un mode de commande de débit dédié, dans lequel la station de base transmet des autorisations absolues, en s'adressant soit à un terminal mobile de la pluralité de terminaux mobiles, soit à un groupe de ladite pluralité de terminaux mobiles, soit à toute la pluralité de terminaux mobiles.

6. Procédé selon la revendication 1, 2 ou 5, dans lequel l'autorisation absolue consiste en un rapport de puissance indiquant la quantité maximum de ressources de liaison montante que le terminal mobile adressé est ou que les terminaux mobiles adressés sont autorisés à utiliser, un seul drapeau de procédé indiquant si l'autorisation absolue est valide seulement pour l'un d'une pluralité de procédés HARQ et le drapeau indiquant si l'autorisation absolue est valide pour un terminal mobile en transfert intercellulaire sans coupure uniquement.

7. Procédé selon la revendication 3 ou 6, dans lequel la quantité maximum de ressources que les terminaux mobiles sont autorisés à utiliser pendant le transfert intercellulaire sans coupure est indiquée par l'autorisation absolue sous la forme d'un pourcentage définissant le taux de pourcentage des ressources de liaison montante maximum qu'un terminal mobile utilise lorsqu'il n'est pas en transfert qui doit être utilisé au maximum par un terminal mobile en transfert intercellulaire sans coupure.

8. Procédé selon l'une des revendications 1 à 7, comprenant en outre l'étape consistant à recevoir en provenance de l'appareil de commande du réseau radio les informations indiquant la quantité maximum de ressources que les terminaux mobiles sont autorisés à utiliser pendant le transfert.

9. Procédé selon la revendication 7, dans lequel la quantité maximum de ressources que les terminaux mobiles sont autorisés à utiliser pendant le transfert est indiquée sous la forme d'un pourcentage définissant le taux de pourcentage des ressources de liaison montante maximum qu'un terminal mobile utilise lorsqu'il n'est pas en transfert qui doit être utilisé au maximum par un terminal mobile en transfert intercellulaire sans coupure.

**10.** Procédé selon l'une des revendications 1 à 7, comprenant en outre les étapes consistant à :

recevoir en provenance d'un terminal mobile en transfert intercellulaire sans coupure des données de liaison montante, par l'intermédiaire d'un canal de liaison montante dédié et des informations de commande associées, par l'intermédiaire d'un canal de commande de liaison montante dédié,

dans lequel les informations de commande comprennent un drapeau de demande de ressources qui, lorsque établi par le terminal mobile, demande à la station de base qui commande la cellule en service d'augmenter les ressources de liaison montante permettant les transmissions de données de liaison montante et

dans lequel les informations de commande comprennent en outre un indicateur de format de transport indiquant la combinaison de format de transport utilisée pour transmettre les données de liaison montante à la station de base qui commande la cellule en service dans un intervalle de temps de transmission,

détecter par la station de base si le drapeau de demande de ressources est établi et si l'indicateur de format de transport indique une combinaison de format de transport utilisant une quantité plus faible de ressources de liaison montante que celles autorisée par la station de base de la cellule en service dans l'autorisation absolue valide pour un terminal mobile en transfert intercellulaire sans coupure uniquement, et

si c'est le cas, transmettre au terminal mobile une autre autorisation absolue, où l'autorisation absolue indique la quantité maximum de ressources le liaison montante qu'un terminal mobile est autorisé à utiliser pour les transmissions de données de liaison montante à la station de base qui commande la cellule en service et à une station de base qui commande une cellule n'étant pas en service du terminal mobile, par l'intermédiaire de canaux de liaison montante dédiés,

dans lequel la quantité maximum de ressources indiquée dans l'autorisation absolue est plus faible que la quantité maximum de ressources de liaison montante que les terminaux mobiles en transfert intercellulaire sans coupure sont habituellement autorisés à utiliser, et

dans lequel l'autorisation absolue comprend des informations indiquant que l'autorisation absolue est valide pour un terminal mobile en transfert intercellulaire sans coupure uniquement.

**11.** Procédé permettant d'agir sur la réception des autorisations absolues reçues par un terminal mobile dans un réseau de communications mobile, dans lequel une pluralité de terminaux mobiles comprenant le terminal est ordonnancée par une station de base qui commande la cellule en service des terminaux mobiles, dans lequel une partie de la pluralité des terminaux mobiles est en transfert intercellulaire sans coupure vers une cellule n'étant pas en service, respectivement, le procédé comprenant les étapes suivantes exécutées par le terminal mobile :

recevoir par l'intermédiaire d'un canal d' autorisation absolue partagé une première autorisation absolue en provenance de la station de base qui commande la cellule en service, où une autorisation absolue indique la quantité maximum de ressources de liaison montante que le terminal mobile est autorisé à utiliser pour des transmissions de données de liaison montante à la station de base qui commande la cellule en service et à une station de base qui commande une cellule n'étant pas en service du terminal mobile, par l'intermédiaire de canaux de liaison montante dédiés, et l'autorisation absolue comprend des informations indiquant si l'autorisation absolue est valide pour les terminaux mobiles en transfert intercellulaire sans coupure uniquement,

où les informations dans la première autorisation absolue indiquent que la première autorisation absolue est valide pour la pluralité de terminaux mobiles, et

transmettre des données de liaison montante à la station de base qui commande la cellule en service, par l'intermédiaire d'un canal de liaison montante dédié, la quantité de ressources de liaison montante utilisée pour la transmission de données sur le canal de liaison montante dédié étant choisie en fonction de la quantité maximum de ressources indiquée par la première autorisation absolue.

**12.** Procédé selon la revendication 11, dans lequel le terminal mobile n'est pas en transfert intercellulaire sans coupure et le procédé comprend en outre les étapes consistant à :

recevoir une deuxième autorisation absolue en provenance de la station de base qui commande la cellule en service, où la deuxième autorisation absolue comprend des informations indiquant que la deuxième autorisation absolue est valide pour un terminal mobile en transfert intercellulaire sans coupure uniquement, et

mémoriser la quantité maximum de ressources de liaison montante indiquée par l'autorisation d'ordonnancement pour des transmissions de données de liaison montante en transfert intercellulaire sans coupure.

**13.** Procédé selon la revendication 12, comprenant en outre l'étape consistant à transmettre des données de liaison montante à la station de base qui commande la cellule en service et à la station de base qui commande la cellule n'étant pas en service, par l'intermédiaire de canaux de liaison montante dédiés, respectivement, dans lequel la quantité de ressources de liaison montante utilisée pour la transmission de données sur les canaux de liaison montante dédiés est choisie en fonction de la quantité maximum mémorisée de ressources indiquée par l'autorisation absolue sur le terminal mobile entrant un transfert intercellulaire sans coupure dans une cellule n'étant pas en service.

14. Procédé selon la revendication 12 ou 13, dans lequel, lorsque le terminal mobile entre en transfert intercellulaire sans coupure dans la cellule n'étant pas en service, le terminal mobile transmet des données de liaison montante à la station de base qui commande la cellule en service et à la station de base qui commande la cellule n'étant pas en service, en utilisant une quantité de ressources de liaison montante choisies en fonction de la quantité maximum de ressources indiquée par la première autorisation absolue, si aucun maximum de ressources de liaison montante à utiliser par un terminal mobile en transfert intercellulaire sans coupure pour le terminal mobile lorsqu'il entre en transfert intercellulaire sans coupure n'a été mémorisé préalablement.

15. Procédé selon l'une des revendications 12 à 14,
dans lequel la deuxième autorisation absolue définit un pourcentage de la quantité maximum de ressources que le terminal mobile est autorisé à utiliser lorsqu'il n'est pas en transfert intercellulaire sans coupure qui va être utilisé pour des transmissions de données en liaison montante, par l'intermédiaire dudit canal dédié, lorsque le terminal mobile est en transfert intercellulaire au maximum, et
le procédé comprend en outre l'étape consistant à déterminer la quantité maximum de ressources de liaison montante que le terminal mobile est autorisé à utiliser pour des transmissions de liaison montante pendant le transfert intercellulaire sans coupure, en fonction du pourcentage indiqué dans la deuxième autorisation absolue.

16. Procédé selon la revendication 11, dans lequel la première autorisation absolue est reçue lorsque le terminal mobile est en transfert intercellulaire sans coupure, et le procédé comprenant en outre l'étape consistant à choisir la quantité de ressources de liaison montante utilisée pour la transmission de données sur les canaux de liaison montante dédiés à la station de base qui commande la cellule en service et à la station de base qui commande la cellule n'étant pas en service, conformément à la quantité maximum de ressources indiquée dans la première autorisation absolue, si la quantité maximum de ressources de liaison montante dans la première autorisation absolue est plus faible que la quantité de ressources habituellement utilisée pour les transmissions de liaison montante sur les canaux dédiés.

17. Procédé selon l'une des revendications 1 à 16,
dans lequel le canal d'autorisation absolue est un canal partagé par les terminaux mobiles et par l'intermédiaire duquel la station de base qui commande la cellule en service transmet les autorisations absolues aux terminaux mobiles.

18. Station de base permettant d'ordonnancer des terminaux mobiles dans un réseau de communications mobile, dans laquelle une partie de la pluralité des terminaux mobiles est en transfert intercellulaire sans coupure vers une cellule n'étant pas en service, respectivement, la station de base comprenant :

un émetteur permettant d'émettre, par l'intermédiaire d'un canal d'autorisation absolue partagé une autorisation absolue aux terminaux mobiles, dans lequel l'autorisation absolue indique la quantité maximum de ressources de liaison montante qu'un terminal mobile est autorisé à utiliser pour des transmissions de données de liaison montante à la station de base qui commande la cellule en service et à une station de base qui commande une cellule n'étant pas en service du terminal mobile, par l'intermédiaire d'un canal de liaison montante dédié, la station de base est adaptée, de telle manière que des informations sont contenues dans l'autorisation absolue qui indiquent que l'autorisation absolue est valide pour un terminal mobile en transfert intercellulaire sans coupure uniquement, et
la station de base comprend en outre un récepteur permettant de recevoir des données de liaison montante en provenance des terminaux mobiles en transfert intercellulaire sans coupure par l'intermédiaire de canaux de liaison montante dédiés, dans laquelle la quantité de ressources utilisée sur le canal de liaison montante dédié a été établie en fonction de la quantité maximum de ressources indiquée dans l'autorisation absolue.

19. Station de base selon la revendication 18, comprenant en outre un moyen adapté pour exécuter les étapes du procédé selon l'une des revendications 1 à 10.

20. Terminal mobile qui répond à la réception des autorisations absolues reçues par le terminal mobile dans un réseau de communications mobile, où une pluralité de terminaux mobiles comprenant le terminal est ordonnancée par une station de base qui commande la cellule en service des terminaux mobiles, où une partie de la pluralité de terminaux mobiles est en transfert intercellulaire sans coupure vers une cellule n'étant pas en service, respectivement, le terminal mobile comprenant :

un récepteur permettant de recevoir, par l'intermédiaire d'un canal d'autorisation absolue partagé, une première autorisation absolue en provenance de la station de base qui commande la cellule en service, dans lequel une autorisation absolue indique la quantité maximum de ressources de liaison montante que le terminal mobile est autorisé à utiliser pour des transmissions de données de liaison montante à la station de base qui commande une cellule en service et à une station de base qui commande la cellule n'étant pas en service du terminal mobile, par l'intermédiaire de canaux de liaison montante dédiés, et l'autorisation absolue comprend des informations indiquant si l'autorisation absolue est valide pour les terminaux mobiles en transfert intercellulaire sans coupure uniquement,
dans lequel les informations dans la première autorisation absolue indiquent que la première autorisation absolue est valide pour tous les terminaux mobiles, et
un émetteur permettant d'émettre des données de liaison montante à la station de base qui commande la cellule en service, par l'intermédiaire d'un canal de liaison montante dédié dans lequel la quantité de ressources de liaison montante utilisée pour la transmission de données sur le canal de liaison montante dédié est choisie en fonction de la quantité maximum de ressources indiquée par la première autorisation absolue.

21. Terminal mobile selon la revendication 20, comprenant en outre un moyen adapté pour exécuter les étapes du procédé selon l'une des revendications 11 à 17.

22. Support lisible sur ordinateur mémorisant des instructions qui, lorsqu'elles sont exécutées par un processeur d'une station de base, font que la station de base ordonnance les terminaux mobiles dans un réseau de communications mobile, dans lequel une pluralité de terminaux mobiles est ordonnancée par une station de base qui commande la cellule en service des terminaux mobiles, dans lequel une partie de la pluralité de terminaux mobiles est en transfert intercellulaire sans coupure vers une cellule n'étant pas en service, respectivement, en :

transmettant par l'intermédiaire d'un canal d'autorisation absolue partagé une autorisation absolue aux terminaux mobiles, où l'autorisation absolue indique la quantité maximum de ressources de liaison montante qu'un terminal mobile est autorisé à utiliser pour des transmissions de données de liaison montante à la station de base qui commande la cellule en service et à une station de base qui commande une cellule n'étant pas en service du terminal mobile, par l'intermédiaire de canaux de liaison montante dédiés,
dans lequel l'autorisation absolue comprend des informations indiquant que l'autorisation absolue est valide pour un terminal mobile en transfert intercellulaire sans coupure uniquement, et
recevant des données de liaison montante en provenance des terminaux mobiles en transfert intercellulaire sans coupure, par l'intermédiaire de canaux de liaison montante dédiés, où la quantité de ressources utilisée sur le canal de liaison montante dédié a été établi en fonction de la quantité maximum de ressources indiquée dans l'autorisation absolue.

23. Support lisible sur ordinateur selon la revendication 22, mémorisant en outre des instructions qui, lorsqu'elles sont exécutées par le processeur de la station de base, font que la station de base exécute les étapes du procédé selon l'une des revendications 1 à 10.

24. Support lisible sur ordinateur mémorisant des instructions qui, lorsqu'elles sont exécutées par un processeur du terminal mobile, font que le terminal mobile agit sur la réception des autorisations absolues reçues par le terminal mobile dans un réseau de communications mobile, dans lequel une pluralité de terminaux mobiles comprenant le terminal est ordonnancée par une station de base qui commande la cellule en service des terminaux mobiles, dans lequel une partie de la pluralité de terminaux mobiles est en transfert intercellulaire sans coupure vers une cellule n'étant pas en service, respectivement, en :

recevant par l'intermédiaire d'un canal d'autorisation absolue partagé une première autorisation absolue, en provenance de la station de base qui commande la cellule en service, où une autorisation absolue indique la quantité maximum de ressources de liaison montante que le terminal mobile est autorisé à utiliser pour des transmissions de données de liaison montante à la station de base qui commande la cellule en service et à une station de base qui commande la cellule n'étant pas en service du terminal mobile, par l'intermédiaire de canaux de liaison montante dédiés, et l'autorisation absolue comprend des informations indiquant si l'autorisation absolue est valide pour des terminaux mobiles en transfert intercellulaire sans coupure uniquement, dans lequel les informations dans la première autorisation absolue indiquent que la première autorisation absolue est valide pour la pluralité de terminaux mobiles, et

transmettant des données de liaison montante à la station de base qui commande la cellule en service, par l'intermédiaire d'un canal de liaison montante dédié, dans lequel la quantité de ressources de liaison montante utilisée pour une transmission de données sur le canal de liaison montante dédié est choisi en fonction de la quantité maximum de ressources indiquée par la première autorisation absolue.

25. Support lisible sur ordinateur selon la revendication 24, mémorisant en outre des instructions qui, lorsqu'elles sont exécutées par le processeur du terminal mobile, font que le terminal mobile exécute les étapes du procédé selon l'une des revendications 11 à 17.

EP 1 708 523 B1

**Fig. 1**

**Fig. 2**

101

Core network

Iu

202

S-RNS

RNC

201

D-RNS

RNC

Iur

Iub

Iub

Node B

Node B

205

Iub

Iub

Node B

Node B

206

203

204

302

301

**Fig. 3**

UE

103

RLC and higher layer entities

MAC-d

MAC-e

physical layer

**Fig. 4**

RLC    DCCH    DTCH    DTCH

| RLC PDU | header | data |

MAC-d

| MAC-d PDU | data |

MAC-d flows

numbering   numbering   numbering

| MAC-es PDU | TSN | data | ... | data | data |

multiplexing

mapping information
signalled via RRC (PDU size,
logican channel ID, MAC-d
flow ID)

MAC-es/e

MAC-e PDU

| DDI | N | ... | DDI | N | DDI | N | data | ... | data | data |

← MAC-e PDU header →    ← MAC-e PDU data →

HARQ
processes

Layer 1

| data |

**Fig. 5**

EP 1 708 523 B1

from MAC-d

MAC Control

E-TFC selection

multiplexing &
TSN setting

MAC-es/e

HARQ

associated scheduling
downlink signalling
(E-AGCH / ERGCH(s))

associated ACK/
NACK signalling
(E-HICH)

E-DCH

associated uplink
signalling E-TFC
(E-DPCCH)

**Fig. 6**

to MAC-es

MAC Control

E-DCH
Scheduling

E-DCH
Control

demultiplexing

MAC-e

HARQ

E-DCH

associated uplink
signalling
(E-HICH, E-DPCCH)

associated downlink
signalling
(E-AGCH, E-RGCH(s))

**Fig. 8**

MAC Control ... MAC Control ... PCCH BCCH CCCH CTCH SHCCH (TDD only) MAC Control ... MAC Control MAC Control DCCH DTCH DTCH

MAC-es

MAC-d

Configuration without MAC c/sh

Configuration with MAC c/sh

MAC-e

MAC-hs

Configuration with MAC c/sh

MAC-c/sh

E-DCH

HS-DSCH HS-DSCH

Iub

PCH FACH FACH RACH CPCH (FDD only) USCH (TDD only) USCH (TDD only) DSCH DSCH Iur or local

DCH DCH

Associated Downlink Signalling

Associated Uplink Signalling

Associated Downlink Signalling

Associated Uplink Signalling

EP 1 708 523 B1

Fig. 7

to MAC-d      to MAC-d      to MAC-d

MAC Control

```
disassembly      disassembly      disassembly

reordering/      reordering/      reordering/
combining        combining        combining

     reordering                reordering
queue distribution        queue distribution
```

MAC-es

MAC-d flow #1                  MAC-d flow #n

from MAC-e             from MAC-e     **Fig. 9**
of Node B #1           of Node B #k

RG interpreted relative
to the previous TTI in the
HARQ process (no. 1)

E-DCH   | 1 | 2 | 3 | 4 | 1 | 2 | 3 | 4 |

E-RGCH

scheduling decision                       time

**Fig. 10**

Fig. 11

**Fig. 12**

from Fig. 12, 1202 or 1210

1211

"DOWN" received from non-serving cell?

no

yes

1212

MAX SG = PR - delta$_2$

SG = MAX SG

1213

1214

happy bit setting decision

- -- power status
- -- buffer occupancy
- -- PR, MAX SG

1215

select TF for current SG value

transmit uplink data with selected TF and associated control information (inter alia TFCI, happy bit)

1216

to Fig. 12, 1202

**Fig. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 17085 A

- US 5914950 A